# EUROPEAN PATENT APPLICATION

(11) **EP 4 642 041 A1**
(43) Date of publication of application: **29.10.2025**
(21) Application number: 23928408.6
(22) Date of filing: 06.12.2023
(51) Int. Cl.: H04N 23/57

(54) **DRIVING MOTOR, CAMERA MODULE AND ELECTRONIC DEVICE**

(30) Priority: 22.03.2023 CN 202310325680
(71) Applicant: Honor Device Co., Ltd., Shenzhen, Guangdong 518040 (CN)
(72) Inventor: XIAO, Ying, Shenzhen, Guangdong 518040 (CN); XIA, Taihong, Shenzhen, Guangdong 518040 (CN); YUAN, Shuai, Shenzhen, Guangdong 518040 (CN); CHEN, Chao, Shenzhen, Guangdong 518040 (CN)
(74) Representative: Isarpatent
(86) International application number: PCT/CN2023/136831
(87) International publication number: WO 2024/193104

(57) **Abstract**

This application provides a driving motor, a camera module, and an electronic device, and relates to the technical field of electronic devices, to rapidly stop or brake an optical element after rotating at a high speed. The driving motor includes a base body, a first carrier, a first driving assembly, a second driving assembly, and a first braking assembly. The first carrier is connected to the base body. The first driving assembly is configured to drive the first carrier to rotate about a first axis relative to the base body. The second driving assembly is configured to drive the first carrier to rotate about a second axis relative to the base body, and the second axis is perpendicular to the first axis. The first braking assembly includes a first braking member and a second braking member, the first braking member is disposed on the base body, the second braking member is disposed on the first carrier, the first braking member includes a concave spherical surface, the second braking member includes a convex spherical surface, and the convex spherical surface fits with the concave spherical surface. The driving motor is configured to drive an optical element to rotate to track a moving object.

## Description

This application claims priority to Chinese Patent Application No. 202310325680.3, filed with the China National Intellectual Property Administration on March 22, 2023 and entitled "DRIVING MOTOR, CAMERA MODULE, AND ELECTRONIC DEVICE", which is incorporated herein by reference in its entirety.

### TECHNICAL FIELD

This application relates to the field of electronic device technologies, and in particular, to a driving motor, a camera module, and an electronic device.

### BACKGROUND

Currently, an electronic device such as a mobile phone, a tablet computer, or a personal computer (Personal Computer, PC) has a camera module. The camera module is configured to shoot a video and an image.

With the development of technologies, the camera module is required to have a function of tracking a moving object. Based on this, a driving motor may be disposed in the camera module. The driving motor is configured to drive an optical element (for example, an optical path turning element or an optical lens) to rotate at a high speed relative to a housing of the electronic device, to quickly switch a photographing angle of the camera module on the premise that a position of the entire machine is fixed, thereby tracking a moving object. However, because the optical element and a carrier carrying the optical element have relatively large mass and have relatively large inertia in a rapid rotation process, it is difficult to quickly stop or brake.

### SUMMARY

Embodiments of this application provide a driving motor, a camera module, and an electronic device, to rapidly stop or brake an optical element after rotating at a high speed.

To achieve the foregoing objective, the following technical solutions are used in the embodiments of this application:
According to a first aspect, a driving motor is provided. The driving motor includes a base body, a first carrier, a first driving assembly, a second driving assembly, and a first braking assembly. The first carrier is connected to the base body. The first driving assembly is configured to drive the first carrier to rotate about a first axis relative to the base body. The second driving assembly is configured to drive the first carrier to rotate about a second axis relative to the base body. The second axis is perpendicular to the first axis. The first braking assembly includes a first braking member and a second braking member, the first braking member is disposed on the base body, the second braking member is disposed on the first carrier, the first braking member includes a concave spherical surface, the second braking member includes a convex spherical surface, and the convex spherical surface fits with the concave spherical surface.

In this way, when the first carrier rotates about the first axis and the second axis relative to the base body, the convex spherical surface and the concave spherical surface generate a friction force due to relative motion. After the first carrier rotates at a high speed and driving forces of the first driving assembly and the second driving assembly are canceled, the first carrier may be quickly braked by using the friction force. The structure is simple and is convenient to operate.

In a possible implementation of the first aspect, the first braking member includes a first braking member body, and the concave spherical surface is disposed on the first braking member body. The second braking member includes a second braking member body, and the convex spherical surface is disposed on the second braking member body. A material of the first braking member body and the second braking member body is polyformaldehyde, an acrylonitrile-butadiene-styrene copolymer, stainless steel, rubber, or silica gel. These materials have good wear resistance and a long life, and can improve structural stability of the driving motor and prolong the service life.

In a possible implementation of the first aspect, the first braking member further includes a first elastic member; the first elastic member is disposed between the first braking member body and the base body, and the first elastic member applies, to the first braking member body, an elastic force directed toward the second braking member body; and/or the second braking member further includes a second elastic member, the second elastic member is disposed between the second braking member body and the first carrier, and the second elastic member applies, to the second braking member body, an elastic force directed to the first braking member body. In this way, a pressing action force between the first braking member body and the second braking member body may be increased by using the first elastic member and/or the second elastic member, thereby improve the friction force, to implement rapid braking.

In a possible implementation of the first aspect, the first braking member further includes a first driving structure, the first driving structure is connected to the first braking member body, and the first driving structure is configured to drive the first braking member body to move in a direction away from the second braking member body, to separate the first braking member body from the second braking member body; and/or the second braking member further includes a second driving structure, the second driving structure is connected to the second braking member body, and the second driving structure is configured to drive the second braking member body to move in a direction away from the first braking member body, to separate the second braking member body from the first braking member body. In this way, when the driving motor is running, the first braking member body may be separated from the second braking member body by using the first driving structure and/or the second driving structure, to reduce rotation resistance of the first carrier, reduce wear, and prolong the service life.

In a possible implementation of the first aspect, the first driving structure includes a first electromagnet and a first elastic member. The first electromagnet is located on a side of the first braking member body facing away from the second braking member body, and the first electromagnet is fixed relative to the base body. The first elastic member includes a first fixed portion, a first elastic arm portion, and a first support portion. The first fixed portion is fixed relative to the base body. The first support portion is located between the first electromagnet and the first braking member body, the first braking member body is fixed on the first support portion, and the first elastic arm portion is connected between the first fixed portion and the first support portion. When the first electromagnet is in a power-off state, a gap is provided between the first support portion and the first electromagnet. When the first electromagnet is powered on, the first support portion is attracted to the first electromagnet, and the first braking member body is separated from the second braking member body. The first driving structure has a simple structure, is controlled conveniently, and has a relatively small volume, which can improve structural compactness of the driving motor.

In a possible implementation of the first aspect, the driving motor further includes a second carrier. The second carrier is connected to the base body rotatably about the first axis, and the first carrier is connected to the second carrier rotatably about the second axis. The first driving assembly is disposed between the base body and the second carrier, and is configured to drive the second carrier to rotate about the first axis relative to the base body. The second driving assembly is disposed between the second carrier and the first carrier, and is configured to drive the first carrier to rotate about the second axis relative to the second carrier. The base body and the second carrier form a nodding rotation assembly, and the second carrier and the first carrier form a head swinging rotation assembly. Therefore, the first carrier can rotate about the first axis and the second axis relative to the base body by using the nodding rotation assembly and the head swinging rotation assembly. Compactness of the structure is relatively good, and the two stages of rotation assemblies separately move independently, which is beneficial to improving motion control precision.

In a possible implementation of the first aspect, the base body includes a first side wall and a second side wall that are disposed opposite to each other and arranged at an interval along the first axis. The first side wall is provided with a first semi-circular hole, and the second side wall is provided with a second semi-circular hole. A circular centerline corresponding to the first semi-circular hole and a circular centerline corresponding to the second semi-circular hole are both collinear with the first axis. An inner wall surface of the first semi-circular hole includes a first circular arc surface and a first plane along a circumferential direction of the first semi-circular hole, and the first circular arc surface and the first plane are arranged along a length direction of the second axis. An inner wall surface of the second semi-circular hole includes a second circular arc surface and a second plane along a circumferential direction of the second semi-circular hole, and the second circular arc surface and the second plane are also arranged along the length direction of the second axis. The second carrier is located between the first side wall and the second side wall, the second carrier is provided with a first semi-circular shaft and a second semi-circular shaft, and a circular centerline corresponding to the first semi-circular shaft is collinear with a circular centerline corresponding to the second semi-circular shaft. The first semi-circular shaft is accommodated in the first semi-circular hole and is rotatable in the first semi-circular hole, and the second semi-circular shaft is accommodated in the second semi-circular hole and is rotatable in the second semi-circular hole. In this way, the second carrier is connected to the base body rotatably about the first axis through coordination between the first semi-circular shaft and the first semi-circular hole and coordination between the second semi-circular shaft and the second semi-circular hole. This structure is simple. In addition, because the first circular arc surface and the first plane are arranged along the length direction of the second axis, and the second circular arc surface and the second plane are arranged along the length direction of the second axis, the first semi-circular hole and the first semi-circular shaft, and the second semi-circular hole and the second semi-circular shaft can be made in relatively large sizes, which can improve the support stability of the second carrier on the base body. In addition, sizes of the first semi-circular hole and the first semi-circular shaft, and the second semi-circular hole and the second semi-circular shaft in the length direction of the second axis are relatively small, so that the lengths of the base body and the second carrier in the length direction of the second axis can be reduced, and the driving motor is miniaturized, and is conveniently mounted in an electronic device with limited internal space.

In a possible implementation of the first aspect, along a circumferential direction of the first semi-circular shaft, a side surface of the first semi-circular shaft includes a third circular arc surface and a third plane, the third circular arc surface is opposite to the first circular arc surface, a circular centerline corresponding to the third circular arc surface is collinear with a circular centerline corresponding to the first circular arc surface, and the third plane and the first plane are disposed opposite to each other at an interval. Along a circumferential direction of the second semi-circular shaft, a side surface of the second semi-circular shaft includes a fourth circular arc surface and a fourth plane, the fourth circular arc surface is opposite to the second circular arc surface, a circular centerline corresponding to the fourth circular arc surface is collinear with a circular centerline corresponding to the second circular arc surface, and the fourth plane and the second plane are disposed opposite to each other at an interval. In this way, the third circular arc surface rotates about the first axis relative to the first circular arc surface, so that the first semi-circular shaft rotates about the first axis in the first semi-circular hole. The structure is simple and is convenient to operate. A gap is provided between the third plane and the first plane, and the gap is used for avoiding the first semi-circular shaft in a process in which the first semi-circular shaft rotates. Similarly, the fourth circular arc surface rotates about the first axis relative to the second circular arc surface, so that the second semi-circular shaft rotates about the first axis in the second semi-circular hole. The structure is simple and is convenient to operate. Similarly, a gap is provided between the fourth plane and the second plane, and the gap is used for avoiding the second semi-circular shaft in a process in which the second semi-circular shaft rotates. In this way, the first semi-circular shaft can rotate in the first semi-circular hole, and the second semi-circular shaft can rotate in the second semi-circular hole. The structure is simple.

In a possible implementation of the first aspect, the first circular arc surface is provided with a first limiting groove, and the first limiting groove extends along an arc-shaped contour line of the first circular arc surface. At least one first ball is disposed between the first limiting groove and the third circular arc surface. The second circular arc surface is provided with a second limiting groove, the second limiting groove extends along an arc-shaped contour line of the second circular arc surface, and at least one second ball is disposed between the second limiting groove and the fourth circular arc surface. In this way, rolling friction is implemented between the third circular arc surface and the first circular arc surface by using the first ball, and rolling friction is implemented between the fourth circular arc surface and the second circular arc surface by using the second ball. The rolling friction has a relatively low friction force and relatively low wear, which is beneficial to prolonging the service life of a nodding activation apparatus. In addition, the first ball may be limited by using the first limiting groove, and the second ball may be limited by using the second limiting groove, so that the first ball and the second ball can be prevented from falling off.

In a possible implementation of the first aspect, the first limiting groove runs through a surface of the first side wall that faces the second side wall along a length direction of the first axis. Alternatively, the second limiting groove runs through a surface of the second side wall that faces the first side wall along a length direction of the first axis. In this way, fault tolerance rates of mounting between the first semi-circular shaft and the first semi-circular hole and between the second semi-circular shaft and the second semi-circular hole along the length direction of the first axis can be improved, to avoid a phenomenon of incapability of assembly due to size deviation, thereby reducing the mounting difficulty and improving the mounting efficiency.

In a possible implementation of the first aspect, the first side wall includes a first side wall body and a first limiting member. Two ends of the first side wall body along the length direction of the second axis are respectively a first end and a second end, and the first end is provided with a notch that is sunken toward the second end. The notch includes a first notch part and a second notch part, the second notch part is located on a side of the first notch part away from the first end, and an inner wall surface of the first side wall body defining the second notch part forms the first circular arc surface. A minimum width of the first notch part in a first direction is greater than or equal to a maximum width of the second notch part in the first direction. The first limiting member is fixed in the first notch part, and at least a partial region of an end face of an end of the first limiting member that faces the second notch part forms the first plane. The first direction is perpendicular to the length direction of the first axis, and the first direction is further perpendicular to the length direction of the second axis. In this way, after the first semi-circular shaft and the first ball are mounted to the second notch part through the first notch part, the first limiting member may be fixed in the first notch part, to implement stopping or limiting. The mounting difficulty is relatively low, and the yield is relatively good.

In a possible implementation of the first aspect, the base body further includes a third side wall, and the third side wall is connected between the first side wall and the second side wall. The first driving assembly includes a first coil and a first magnet. The first coil is disposed on the third side wall, the first magnet is disposed on the second carrier, and the first coil is opposite to the first magnet. The driving assembly including the first coil and the first magnet is simple to control, and has a relatively large driving force.

In a possible implementation of the first aspect, a surface of the second carrier that faces the third side wall includes a first convex arc surface, the first convex arc surface projects toward the third side wall, and a circular centerline corresponding to the first convex arc surface is parallel to or collinear with the first axis. In this way, when the second carrier rotates about the first axis relative to the base body, avoidance space required for rotation of the second carrier is relatively small, which is beneficial to reducing the volume of the driving motor and improving structural compactness. In addition, on the premise that the volume of the driving motor is specified, the rotation angle of the first carrier relative to the second carrier can be increased, thereby increasing the maximum tracking angle of the camera module.

In a possible implementation of the first aspect, the first convex arc surface is provided with a first sunken groove, the first magnet is disposed in the first sunken groove, and the first magnet includes a first surface and a second surface. The first surface faces the third side wall, the first surface is a circular arc surface projecting toward the third side wall, and a circular centerline corresponding to the circular arc surface is parallel to or collinear with the first axis. The second surface faces away from the first surface, and the second surface is a plane. In this way, through the first sunken groove, the first magnet can be prevented from projecting out of the surface of the second carrier, and can be prevented from interfering with the first coil and the base body, and structural compactness can be ensured. In addition, because the first surface is a circular arc surface projecting toward the third side wall, relatively small avoidance space is needed in a process in which the second carrier rotates about the first axis. On the premise that a maximum rotation angle of the second carrier is specified, the driving motor has the volume reduced, and can be mounted in an electronic device with limited space. On the premise that the volume of the driving motor is specified, the maximum rotation angle of the second carrier can be increased, to implement large-angle tracking. In addition, because the second surface is a plane, a forming process of the plane is simple, and the yield is relatively high, production costs of the second carrier can be reduced.

In a possible implementation of the first aspect, the second carrier includes a fourth side wall, a fifth side wall, and a sixth side wall. The fourth side wall and the fifth side wall are disposed opposite to each other at an interval, the first semi-circular shaft is disposed on a surface of the fourth side wall facing away from the fifth side wall, and the second semi-circular shaft is disposed on a surface of the fifth side wall facing away from the fourth side wall. The sixth side wall is connected between the fourth side wall and the fifth side wall, the sixth side wall is opposite to the third side wall, and the first convex arc surface is located on a surface of the sixth side wall facing the third side wall. The second carrier has a simple structure and a proper deployment.

In a possible implementation of the first aspect, the first carrier is located between the fourth side wall and the fifth side wall, a rotating shaft is rotatably connected to the sixth side wall, an axis of the rotating shaft is collinear with the second axis, and the first carrier is connected to the rotating shaft. In this way, constrained by the rotating shaft, the rotational motion of the first carrier relative to the second carrier has relatively high precision and relatively good reliability.

In a possible implementation of the first aspect, a surface of the first carrier that faces the fourth side wall is a second convex arc surface, the second convex arc surface projects toward the fourth side wall, and a circular centerline corresponding to the second convex arc surface is parallel to or collinear with the second axis. A surface of the fourth side wall that faces the first carrier is a first concave arc surface, the first concave arc surface is concave in a direction away from the first carrier, a circular centerline corresponding to the first concave arc surface is parallel to or collinear with the second axis, and the first concave arc surface faces the second convex arc surface. A surface of the first carrier that faces the fifth side wall is a third convex arc surface, the third convex arc surface projects toward the fifth side wall, and a circular centerline corresponding to the third convex arc surface is parallel to or collinear with the second axis. A surface of the fifth side wall that faces the first carrier is a second concave arc surface, the second concave arc surface is concave in the direction away from the first carrier, a circular centerline corresponding to the second concave arc surface is parallel to or collinear with the second axis, and the second concave arc surface faces the third convex arc surface. In this way, when the first carrier rotates about the second axis relative to the second carrier, the second convex arc surface rotates in the first concave arc surface, and the third convex arc surface rotates in the second concave arc surface. Relatively small space is needed for rotation of the first carrier, which is beneficial to reducing the volume of the driving motor. In addition, on the premise that the volume of the driving motor is specified, the rotation angle of the first carrier relative to the second carrier can be increased, thereby increasing the maximum tracking angle of the camera module.

In a possible implementation of the first aspect, the second driving assembly includes a second coil, a third coil, a second magnet, and a third magnet. The second coil and the third coil are disposed on a surface of the first carrier that faces the sixth side wall, and the second coil and the third coil are located on two opposite sides of the rotating shaft and are symmetrically disposed about the rotating shaft. The second magnet and the third magnet are disposed on a surface of the sixth side wall that faces the first carrier, the second magnet is opposite to the second coil, and the third magnet is opposite to the third coil. The driving assembly including the second coil, the third coil, the second magnet, and the third magnet is simple to control, and has a relatively large driving force.

In a possible implementation of the first aspect, winding paths of the second coil and the third coil are each in a shape of an isosceles trapezoid, and a top side of the isosceles trapezoid is located on a side, away from the rotating shaft, of a bottom side of the isosceles trapezoid. In this way, a height of one end of the second coil and a height of one end of the third coil close to the rotating shaft in the first direction are relatively large, and a height of one end of the second coil and a height of one end of the third coil away from the rotating shaft in the first direction are relatively small. Therefore, avoidance space required by the second coil and the third coil when the first carrier rotates relative to the second carrier can be reduced, which is beneficial to improving structural compactness and reducing the volume of the driving motor. On the premise that the volume of the driving motor is specified, the maximum angle by which the first carrier swings about the second axis can be increased, thereby improving the tracking angle.

In a possible implementation of the first aspect, the second coil includes a first oblique side and a second oblique side that are opposite, the first oblique side is connected between one end of the top side of the second coil and one end of the bottom side of the second coil, and the second oblique side is connected between the other end of the top side of the second coil and the other end of the bottom side of the second coil. The second magnet includes a third magnet unit and a fourth magnet unit, and the third magnet unit and the fourth magnet unit are arranged at an interval along the first direction. A magnetizing direction of the third magnet unit and a magnetizing direction of the fourth magnet unit are both parallel to the length direction of the second axis, and the magnetizing direction of the third magnet unit is opposite to the magnetizing unit of the fourth magnet unit. The first oblique side is opposite to the third magnet unit, and the second oblique side is opposite to the fourth magnet unit. The structure is simple and has a relatively large driving force.

In a possible implementation of the first aspect, a side surface of the third magnet unit that faces the fourth magnet unit is a first slope, an edge of the first slope that faces the second axis is a first edge, an edge of the first slope that faces away from the second axis is a second edge, and the first slope is inclined, from the first edge to the second edge, in a direction away from the fourth magnet unit. A side surface of the fourth magnet unit that faces the third magnet unit is a second slope, an edge of the second slope that faces the second axis is a third edge, and an edge of the second slope that faces away from the second axis is a fourth edge. The second slope is inclined in a direction away from the third magnet unit from the third edge to the fourth edge. In this way, a triangular gap is formed between the first slope and the second slope, and the triangular gap can avoid a case that the first oblique side and the second oblique side are both opposite to the third magnet unit, and a case that the first oblique side and the second oblique side are both opposite to the fourth magnet unit. Therefore, a driving force of the first carrier can be ensured, to avoid a driving failure.

In a possible implementation of the first aspect, the first carrier includes a first carrier unit, a second carrier unit, and a third driving assembly. The first carrier unit is rotatably connected to the rotating shaft. The second carrier unit is connected to the first carrier unit rotatably about a third axis. The third driving assembly is configured to drive the second carrier unit to rotate about the third axis relative to the first carrier unit. The third axis is parallel to or collinear with the first axis. In this way, an optical path element may be carried on the second carrier unit, and OIS driving is implemented by using the first carrier.

In a possible implementation of the first aspect, the first carrier unit includes a base portion, a first support portion, and a second support portion. The first support portion and the second support portion are disposed on the base portion, and the first support portion and the second support portion are arranged at an interval along a length direction of the third axis. A first semi-circular arc concave surface is disposed on the first support portion, a second semi-circular arc concave surface is disposed on the second support portion, and a circular centerline corresponding to the first semi-circular arc concave surface and a circular centerline corresponding to the second semi-circular arc concave surface are both collinear with the third axis. The second carrier unit is provided with a first semi-circular convex portion and a second semi-circular convex portion, a circular centerline corresponding to the first semi-circular convex portion and a circular centerline corresponding to the second semi-circular convex portion are collinear, the first semi-circular convex portion is supported on the first semi-circular arc concave surface and is rotatable along the first semi-circular arc concave surface, and the second semi-circular convex portion is supported on the second semi-circular arc concave surface and is rotatable along the second semi-circular arc concave surface. In this way, the first semi-circular convex portion and the second semi-circular convex portion can be made in relatively large sizes, which can ensure the support stability.

In a possible implementation of the first aspect, the first carrier unit further includes a first side portion and a second side portion. The first side portion is disposed on a side of the first support portion facing away from the second support portion, and the second side portion is disposed on a side of the second support portion facing away from the first support portion. The second convex arc surface is located on a surface of the first side portion facing away from the first support portion, and the third convex arc surface is located on a surface of the second side portion facing away from the second support portion. In this way, the first semi-circular arc concave surface and the second convex arc surface may be dispersedly deployed on the first support portion and the first side portion, and the second semi-circular arc concave surface and the third convex arc surface may be dispersedly deployed on the second support portion and the second side portion. This deployment is proper and can ensure structural strength.

In a possible implementation of the first aspect, the first carrier unit further includes a third side portion. The third side portion is connected between the first side portion and the second side portion and is disposed opposite to the sixth side wall, the second carrier unit is located between the first side portion and the second side portion and is located on a side of the third side portion that faces away from the sixth side wall, the second coil and the third coil are disposed on a surface of the third side portion that faces the sixth side wall, and the second magnet and the third magnet are disposed on a surface of the sixth side wall that faces the third side portion. In this way, the first support portion, the second support portion, and the second carrier unit may be protected by using the first side portion, the second side portion, and the third side portion, to avoid a case that when rotating relative to the first carrier unit, the second carrier unit interferes with the second carrier and the base body.

In a possible implementation of the first aspect, the third driving assembly includes a fourth coil and a fourth magnet. The fourth coil is disposed at the base portion, the fourth magnet is disposed on a surface of the second carrier unit that faces the base portion, and the fourth magnet is opposite to the fourth coil. The driving assembly including the fourth coil and the fourth magnet is simple to control, and has a relatively large driving force.

In a possible implementation of the first aspect, the driving motor further includes a second braking assembly. The second braking assembly includes a third braking member and a fourth braking member. The third braking member is disposed on the base body, and the fourth braking member is disposed on the second carrier. The third braking member includes a first limiting portion, the fourth braking member includes a second limiting portion, and the first limiting portion cooperates with the second limiting portion to prevent the second carrier from rotating about the first axis relative to the base body. In this way, when the driving motor is stopped and reset, the second carrier may be prevented from rotating relative to the base body by using the third braking member and the fourth braking member, so that noise can be reduced and stopping stability and reliability can be ensured.

In a possible implementation of the first aspect, the third braking member further includes a third driving structure, the third driving structure is connected to the first limiting portion, and the third driving structure is configured to drive the first limiting portion to move in a direction away from the second limiting portion, to separate the first limiting portion from the second limiting portion; and/or the fourth braking member further includes a fourth driving structure, the fourth driving structure is connected to the second limiting portion, and the fourth driving structure is configured to drive the second limiting portion to move in a direction away from the first limiting portion, to separate the second limiting portion from the first limiting portion. In this way, when the driving motor is started, the first limiting portion may be separated from the second limiting portion by using the third driving structure and/or the fourth driving structure, to reduce rotation resistance of the second carrier, reduce wear, and prolong the service life.

In a possible implementation of the first aspect, the third driving structure includes a second electromagnet and a second elastic member. The second electromagnet is located on a side of the first limiting portion facing away from the second limiting portion, and the second electromagnet is fixed relative to the base body. The second elastic member includes a second fixed portion, a second elastic arm portion, and a second support portion. The second fixed portion is fixed relative to the base body. The second support portion is located between the second electromagnet and the first limiting portion, the first limiting portion is disposed on the second support portion, and the second elastic arm portion is connected between the second fixed portion and the second support portion. When the second electromagnet is in a power-off state, a gap is provided between the second support portion and the second electromagnet. When the second electromagnet is powered on, the second support portion is attracted to the second electromagnet, and the first limiting portion is separated from the second limiting portion. The third driving structure has a simple structure, is controlled conveniently, and has a relatively small volume, which can improve structural compactness of the driving motor.

According to a second aspect, a camera module is further provided. The camera module includes an optical path turning element, an optical lens, a photosensitive device, and the driving motor described in any one of the foregoing technical solutions. The optical lens is located on a light emergent side of the optical path turning element. The photosensitive device is located on a light emergent side of the optical lens. The optical path turning element is fixed on the first carrier of the driving motor.

Because the camera module provided in this application includes the driving motor described in any one of the foregoing technical solutions, the two can resolve a same technical problem and achieve a same effect.

According to a third aspect, an electronic device is further provided. The electronic device includes a display, a back housing, a camera module, and a circuit board assembly. The back housing is fixed to the display. The camera module is the camera module described in the foregoing technical solutions, and the camera module is accommodated in the back housing. The circuit board assembly is accommodated in the back housing, and the circuit board assembly is electrically connected to the camera module.

Because the electronic device provided in this application includes the camera module described in the foregoing technical solutions, the two can resolve a same technical problem and achieve a same effect.

### BRIEF DESCRIPTION OF DRAWINGS

FIG. 1 is a three-dimensional view of an electronic device according to some embodiments of this application;
FIG. 2 is a schematic diagram of an exploded structure of the electronic device shown in FIG. 1;
FIG. 3 is a block diagram of a structure of a camera module according to some embodiments of this application;
FIG. 4 is a schematic diagram of a motion state of the camera module shown in FIG. 3 in a process of tracking a moving object;
FIG. 5 is a schematic diagram of a motion state of the camera module shown in FIG. 3 in a process of tracking another moving object;
FIG. 6 is an assembly diagram of a driving motor and an optical path turning element according to some embodiments of this application;
FIG. 7 is a schematic diagram of an exploded structure of an assembly structure shown in FIG. 6;
FIG. 8 is a schematic diagram of an exploded structure of a driving motor in an assembly structure shown in FIG. 7;
FIG. 9 is an assembly diagram of a nodding activation apparatus in the driving motor shown in FIG. 8;
FIG. 10 is a schematic diagram of an exploded structure of the nodding activation apparatus shown in FIG. 9;
FIG. 11 is a schematic diagram of an exploded structure of the nodding activation apparatus shown in FIG. 10 from another viewing angle;
FIG. 12 is a three-dimensional diagram of a partial structure of a base body in the nodding activation apparatus shown in FIG. 10 and FIG. 11;
FIG. 13 is a three-dimensional diagram of a second carrier in the nodding activation apparatus shown in FIG. 10 and FIG. 11;
FIG. 14 is a diagram of structure and force analysis of a first driving assembly in the nodding activation apparatus shown in FIG. 10 and FIG. 11;
FIG. 15 is a schematic diagram of an exploded structure of a second carrier and a first magnet in the nodding activation apparatus shown in FIG. 10;
FIG. 16 is a schematic structural diagram of a surface, facing a first magnet, of a first driving chip in the nodding activation apparatus shown in FIG. 10 and FIG. 11;
FIG. 17 is a schematic structural diagram of a surface, facing a first circuit board, of a first driving chip in the nodding activation apparatus shown in FIG. 10 and FIG. 11;
FIG. 18 is an assembly diagram of a head swinging activation apparatus in the driving motor shown in FIG. 8;
FIG. 19 is a schematic diagram of an exploded structure of the head swinging activation apparatus shown in FIG. 18;
FIG. 20 is a schematic diagram of an exploded structure of the head swinging activation apparatus shown in FIG. 19 from another viewing angle;
FIG. 21 is a schematic diagram of relative positions of a second coil, a third coil, a second magnet, and a third magnet in the head swinging driving apparatus shown in FIG. 20;
FIG. 22 is a schematic structural diagram of a first magnet and a second magnet in the assembly shown in FIG. 21.
FIG. 23 is a schematic diagram of relative positions of the assembly shown in FIG. 21 when the second coil and the third coil rotate clockwise to a maximum angle;
FIG. 24 is a schematic diagram of relative positions of the assembly shown in FIG. 21 when the second coil and the third coil rotate anticlockwise to a maximum angle;
FIG. 25 is a three-dimensional diagram of a third circuit board in the head swinging activation apparatus shown in FIG. 19 and FIG. 20 from a viewing angle;
FIG. 26 is a three-dimensional diagram of the third circuit board shown in FIG. 25 from another viewing angle;
FIG. 27 is an assembly diagram of a third circuit board, a first carrier, a second coil, a third coil, and a second driving chip in the head swinging activation apparatus shown in FIG. 19 and FIG. 20.
FIG. 28 is a three-dimensional diagram of the assembly structure shown in FIG. 27 from another viewing angle;
FIG. 29 is a three-dimensional diagram of a first carrier in the driving motor shown in FIG. 8;
FIG. 30 is a schematic diagram of an exploded structure of the first carrier shown in FIG. 29;
FIG. 31 is a schematic diagram of an exploded structure of the first carrier shown in FIG. 30 from another viewing angle;
FIG. 32 is a schematic diagram of an exploded structure of the first carrier shown in FIG. 30 from another viewing angle;
FIG. 33 is an assembly diagram of the third circuit board shown in FIG. 25 and FIG. 26, and a first carrier unit and a third driving assembly of the first carrier shown in FIG. 29 to FIG. 32;
FIG. 34 is a schematic cross-sectional structural diagram of the assembly structure shown in FIG. 33 along a direction A-A;
FIG. 35 is a schematic structural diagram of a second circuit board in the nodding activation apparatus shown in FIG. 10 and FIG. 11;
FIG. 36 is a schematic diagram of an assembly structure of a first carrier and a second braking member in the driving motor shown in FIG. 8;
FIG. 37 is a schematic cross-sectional structural diagram of a driving motor in the assembly shown in FIG. 7 along a direction B-B;
FIG. 38 is a schematic structural diagram of a first braking assembly according to some other embodiments of this application;
FIG. 39 is a schematic diagram of relative positions of a first braking member body and a second braking member body that are separated in the first braking assembly shown in FIG. 38; and
FIG. 40 is a schematic diagram of relative positions of a first limiting portion and a second limiting portion that are separated in the driving motor shown in FIG. 37.

### DESCRIPTION OF EMBODIMENTS

In the embodiments of this application, the terms "first", "second", "third", "fourth", "fifth", "sixth", "seventh", and "eighth" are merely used for description, and should not be understood as an indication or implication of relative importance or an implicit indication of a quantity of indicated technical features. Therefore, a feature defined by "first", "second", "third", "fourth", "fifth", "sixth", "seventh", and "eighth" may explicitly or implicitly include one or more features.

In embodiments of this application, the terms "include", "include", and any variants thereof are intended to cover a non-exclusive inclusion. Therefore, a process, method, object, or apparatus that includes a series of elements not only includes such elements, but also includes other elements not specified expressly, or may include inherent elements of the process, method, object, or apparatus. Without more limitations, elements defined by the sentence "including one" does not exclude that there are still other same elements in the process, method, object, or apparatus which includes the element.

In embodiments of this application, "and/or" is merely an association relationship describing related objects, which means that three relationships may exist. For example, A and/or B may represent the following three cases. Only A exists, both A and B exist, and only B exists. In addition, the character "/" in this specification usually indicates an "or" relationship between the associated objects.

In the embodiments of this application, unless otherwise noted, description of "parallel" represents that being approximately parallel within a specific error range is allowed, and the error range may be a range of a deviation angle of 5° or fewer relative to being absolutely parallel. Description of "perpendicular" represents that being approximately perpendicular within a specific error range is allowed, and the error range may be a range of a deviation angle of 5° or fewer relative to being absolutely perpendicular. Description of "collinear" represents being approximately collinear within a specific error range, and the error range may be a range of a deviation angle of 5° or fewer relative to being absolutely collinear.

This application provides an electronic device. The electronic device is an electronic device having a shooting function. Specifically, the electronic device may be a portable electronic apparatus or another suitable electronic apparatus. For example, the electronic device may be a mobile phone, a large screen device, a camera, a monitor, a tablet personal computer (tablet personal computer), a notebook computer, an in-vehicle device, a wearable device, augmented reality (augmented reality, AR) glasses, an AR helmet, virtual reality (virtual reality, VR) glasses, or a VR helmet.

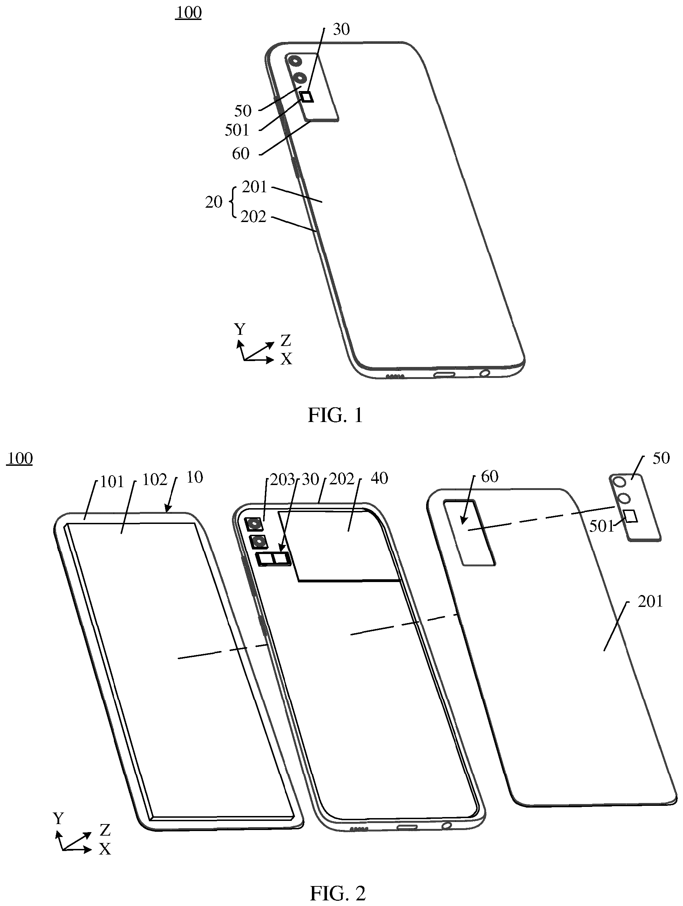

Referring to FIG. 1, FIG. 1 is a three-dimensional view of an electronic device 100 according to some embodiments of this application. In this embodiment and the following embodiments, an example in which the electronic device 100 is a mobile phone is used for description. The electronic device 100 is approximately in the shape of a rectangular flat board. Based on this, for ease of description of the following embodiments, an XYZ coordinate system is established. Specifically, a width direction of the electronic device 100 is defined as an X-axis direction, a length direction of the electronic device 100 is defined as a Y-axis direction, and a thickness direction of the electronic device 100 is defined as a Z-axis direction. It may be understood that the coordinate system of the electronic device 100 may be flexibly set according to an actual requirement, which is not specifically limited herein. When the electronic device 100 is another product, the electronic device 100 may also be approximately cube-shaped, column-shaped, spherical, ellipsoidal, or in another irregular shape, which is not specifically limited herein.

Referring to FIG. 1 and FIG. 2 together, FIG. 2 is a schematic diagram of an exploded structure of the electronic device 100 shown in FIG. 1. The electronic device 100 includes a screen 10, a back housing 20, a camera module 30, a circuit board assembly 40, and a camera decorative cover 50.

It may be understood that FIG. 1 and FIG. 2 schematically show some components included in the electronic device 100. Actual shapes, actual sizes, actual positions, and actual configurations of the components are not limited by FIG. 1 and FIG. 2. In some other examples, the electronic device 100 may not include the screen 10 and the camera decorative cover 50.

The screen 10 is configured to display an image, a video, or the like. The screen 10 includes a light-transmitting cover board 101 and a display 102. The light-transmitting cover board 101 and the display 102 are stacked. The light-transmitting cover board 101 is mainly configured to protect the display 102 and prevent dust. A material of the light-transmitting cover board 101 includes, but is not limited to, glass. The display 102 may be a flexible display, or may be a rigid display. For example, the display 102 may be an organic light-emitting diode (organic light-emitting diode, OLED) display, an active-matrix organic light-emitting diode (active-matrix organic light-emitting diode, AMOLED) display, a mini light-emitting diode (mini light-emitting diode) display, a micro light-emitting diode (micro light-emitting diode) display, a micro organic light-emitting diode (micro organic light-emitting diode) display, a quantum dot light-emitting diode (quantum dot light emitting diodes, QLED) display, or a liquid crystal display (liquid crystal display, LCD).

The back housing 20 is configured to protect the internal electronic components of the electronic device 100. The back housing 20 includes a back cover 201 and a border frame 202. The back cover 201 is located on a side of the display 102 away from the light-transmitting cover board 101, and is stacked with the light-transmitting cover board 101 and the display 102. The border frame 202 is located between the back cover 201 and the light-transmitting cover board 101. In addition, the border frame 202 is fixed on the back cover 201. For example, the border frame 202 may be fixedly connected to the back cover 201 by using an adhesive. Alternatively, the border frame 202 and the back cover 201 may be of an integrally formed structure, that is, the border frame 202 and the back cover 201 are of an integral structure. The light-transmitting cover board 101 is fixed on the border frame 202 through gluing. The light-transmitting cover board 101, the back cover 201, and the border frame 202 define an internal accommodation space of the electronic device 100. The display 102 is accommodated in the internal accommodation space.

The camera module 30 is configured to shoot a video or an image. The camera module 30 is fixed in the internal accommodation space of the electronic device 100. In some embodiments, referring to FIG. 2 mainly, the electronic device 100 further includes a middle board 203. The middle board 203 is fixed around an inner surface of the border frame 202. For example, the middle board 203 may be fixed on the border frame 202 through welding. The middle board 203 and the border frame 202 may alternatively be an integral structure. The middle board 203 is used as a "framework" of a structure of the electronic device 100, and the camera module 30 may be fixed and supported on the middle board 203 through threaded connection, clamping, welding, or the like.

The camera module 30 may be used as a rear-facing camera module. In another embodiment, the camera module 30 may alternatively be used as a front-facing camera module. In this embodiment and the following embodiments, an example in which the camera module 30 is used as a rear-facing camera module is used for description.

Specifically, still referring to FIG. 2 mainly, the camera module 30 may be fixed on a surface of the middle board 203 that faces the back cover 201. A light incident surface of the camera module 30 faces the back cover 201. The back cover 201 is provided with a mounting opening 60. The camera decorative cover 50 covers and is fixed at the mounting opening 60. The camera decorative cover 50 is configured to protect the camera module 30. In some embodiments, the camera decorative cover 50 projects to an outer side of the back cover 201. In this way, the camera decorative cover 50 can increase mounting space of the camera module 30 in the Z-axis direction in the electronic device 100. In some other embodiments, the camera decorative cover 50 may alternatively be flush with the back cover 201 or recessed inward into the internal accommodation space of the electronic device 100. A light-transmitting portion 501 is disposed on the camera decorative cover 50. The light-transmitting portion 501 allows external light to pass through and be incident on the light incident surface of the camera module 30.

The circuit board assembly 40 includes a circuit board and electronic components disposed on the circuit board. The electronic components include but are not limited to a central processing unit (central processing unit, CPU), an intelligent algorithm chip, an image processing chip, or a power management chip (power management IC, PMIC).

The circuit board assembly 40 is fixed in the internal accommodation space of the electronic device 100. For example, the circuit board assembly 40 may be fixed on the middle board 203 through a threaded connection, a clamping connection, or the like. When the electronic device 100 does not include the middle board 203, the circuit board assembly 40 may alternatively be fixed, in a manner such as threaded connection, clamping, or the like, on a surface of the display 102 that is near the back cover 201.

The circuit board assembly 40 is electrically connected to the camera module 30. The circuit board assembly 40 is configured to receive and process an electric signal including image information from the camera module 30, and is further configured to control the camera module 30 to work, to implement large-angle tracking, ultra-wide-angle photographing, optical image stabilization (optical image stabilization, OIS), or automatic focusing (automatic focusing, AF).

The following mainly describes the camera module 30.

The camera module 30 includes, but is not limited to, an upright camera module and a periscope camera module. First, a specific structure of the camera module 30 is described below by using a periscope camera module as an example.

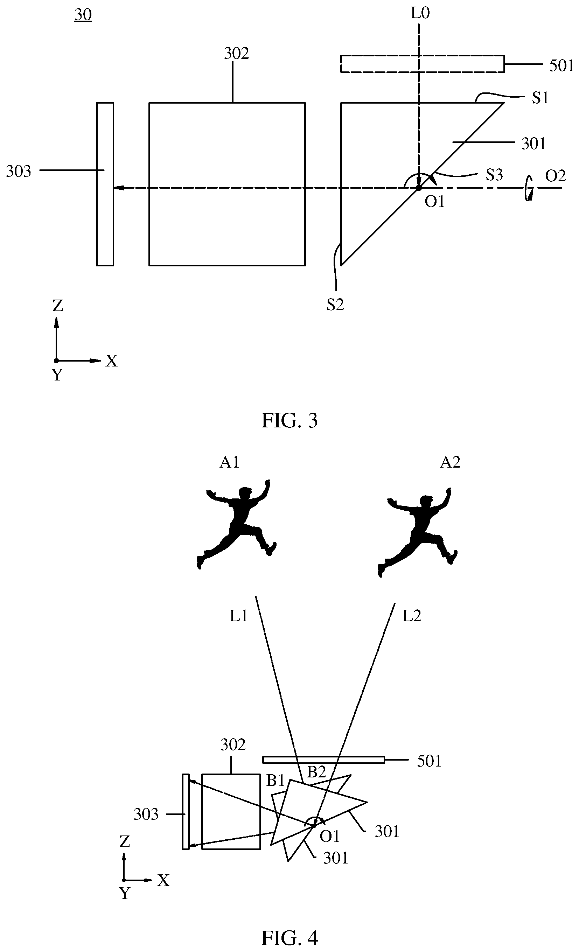

Referring to FIG. 3, FIG. 3 is a block diagram of a structure of a camera module 30 according to some embodiments of this application. The camera module 30 includes an optical path turning element 301, an optical lens 302, a photosensitive device 303, and a driving motor (not shown in FIG. 3).

The optical path turning element 301, the optical lens 302, and the photosensitive device 303 are arranged along the X-axis direction, so that an occupied height of the camera module 30 in the Z-axis direction can be reduced, thereby facilitating thinning of the electronic device 100.

The optical path turning element 301 is configured to change a transmission path of an optical path.

Specifically, still referring to FIG. 3, the optical path turning element 301 may be a triangular prism. The optical path turning element 301 includes a light incident surface S1, a light emergent surface S2, and a light reflective surface S3.

In the state shown in FIG. 3, the light incident surface S1 is parallel to an XY plane. The light incident surface S1 faces the foregoing light-transmitting portion 501. The light emergent surface S2 is parallel to the YZ plane, and the light emergent surface S2 is perpendicular to the light incident surface S1. The light reflective surface S3 is inclined by 45° relative to the light incident surface S1 and the light emergent surface S2.

After being incident into the electronic device 100 from the light-transmitting portion 501, external light is incident into the optical path turning element 301 through the light incident surface S1, is further reflected by the light reflective surface S3, and then is emergent from the light emergent surface S2. A transmission path of the light is a path L0. Therefore, the light is turned once, to form an L-shaped transmission path. Therefore, the optical path turning element 301, the optical lens 302, and the photosensitive device 303 can be arranged along the X-axis direction, to reduce an occupied height of the camera module 30 in the Z-axis direction, thereby facilitating thinning of the electronic device 100.

In another embodiment, the optical path turning element 301 may alternatively be a flat prism or a specular mirror that is obliquely disposed.

The optical lens 302 is configured to image a photographed object.

Referring back to FIG. 3, the optical lens 302 is located on a light emergent side of the optical path turning element 301. Specifically, the optical lens 302 is located on a side faced by the light emergent surface S2.

The optical lens 302 may include a lens barrel and an optical lens element group. The lens barrel is configured to fix and protect the optical lens element group. The lens barrel has a barrel shape, and an axial direction of the lens barrel extends along the X-axis direction. The optical lens element group is mounted in the lens barrel. The optical lens element group includes at least one optical lens element. When the optical lens element group includes a plurality of optical lens elements, the plurality of optical lens elements are sequentially stacked along the axial direction of the lens barrel.

After being emergent from the light emergent surface S2, the light may be incident into the optical lens element group in the optical lens 302, to image the photographed object. Based on this, the photosensitive device 303 is located on a light emergent side of the optical lens 302. In this way, after the imaging, an optical signal is incident into the photosensitive device 303. The photosensitive device 303 is configured to sense the optical signal, convert the optical signal into an electrical signal and output the electrical signal to the foregoing circuit board assembly 40. In this way, an image is shot.

The driving motor is configured to drive the optical path turning element 301 to rotate. Specifically, referring to FIG. 3, the driving motor is configured to drive the optical path turning element 301 to rotate about a first axis O1 and a second axis O2, to track the moving object. The first axis O1 may be parallel to the Y axis, the second axis O2 may be parallel to the X axis, and the second axis O2 is perpendicular to the first axis O1.

The second axis O2 and the first axis O1 may be disposed coplanarly, that is, have an intersection point, or may be disposed non-coplanarly, that is, have no intersection point. This embodiment and the following embodiments are described based on that the second axis O2 and the first axis O1 are disposed coplanarly. This cannot be considered as a special limitation on this application.

For example, referring to FIG. 4, FIG. 4 is a schematic diagram of a motion state of the camera module 30 shown in FIG. 3 in a process of tracking a moving object. In this example, the moving object is athlete 1. Relative to the electronic device 100, the athlete 1 is in a process of continuously jumping along the X-axis direction. When the athlete 1 moves from the position A1 to the position A2, the driving motor drives the optical path turning element 301 to rotate from the position B1 to the position B2 about the first axis O1, and the optical path is switched from the L1 path to the L2 path, to track the athlete 1.

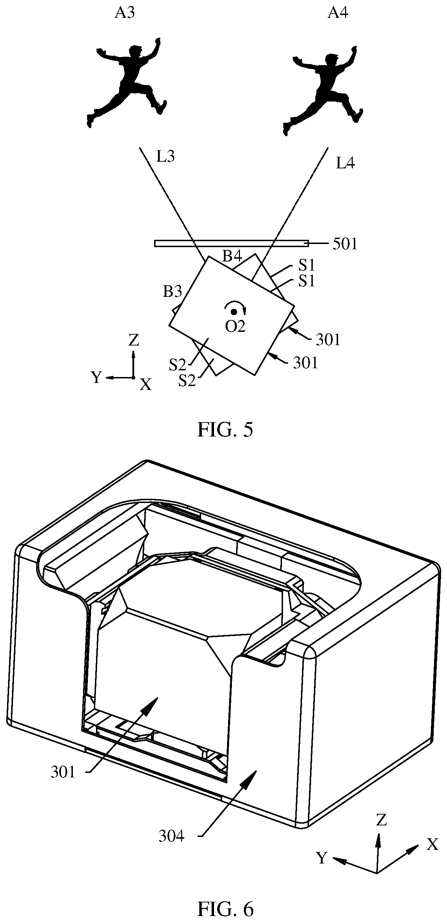

For another example, referring to FIG. 5, FIG. 5 is a schematic diagram of a motion state of the camera module 30 shown in FIG. 3 in a process of tracking another moving object. In this example, the moving object is athlete 2. Relative to the electronic device 100, the athlete 2 is in a process of continuously jumping along the Y-axis direction. When the athlete 2 moves from the position A3 to the position A4, the driving motor drives the optical path turning element 301 to rotate from the position B3 to the position B4 about the second axis O2, and the optical path is switched from the L3 path to the L4 path, to track the athlete 2.

It may be known that because moving paths of moving objects and positions of the moving objects relative to the electronic device 100 are different, the driving motor jointly drives the optical path turning element 301 to rotate about the second axis O2 while driving the optical path turning element 301 to rotate about the first axis O1 in most tracking scenarios, to track different moving objects.

Relative to the state shown in FIG. 3, a maximum rotation angle of the optical path turning element 301 leftwards or rightwards about the first axis O1 is a first maximum rotation angle, and a maximum rotation angle of the optical path turning element 301 forwards or backwards about the second rotating shaft O2 is a second maximum rotation angle. The first maximum rotation angle and the second maximum rotation angle may be greater than or equal to 5° and less than or equal to 30°. Specifically, the first maximum rotation angle and the second maximum rotation angle may be 5°, 6°, 7°, 10°, 20°, 25°, or 30°.

It should be noted that to describe a motion form of the optical path turning element 301 more vividly, a rotational motion of the optical path turning element 301 about the first axis O1 may be referred to as a nodding motion, and a rotational motion of the optical path turning element 301 about the second axis O2 may be referred to as a head swinging motion.

The following mainly describes the driving motor.

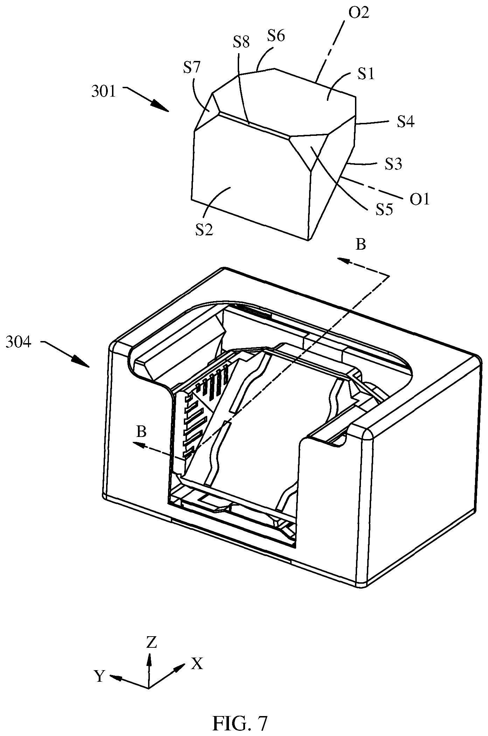

Referring to FIG. 6 and FIG. 7, FIG. 6 is an assembly diagram of a driving motor 304 and an optical path turning element 301 according to some embodiments of this application, and FIG. 7 is a schematic diagram of an exploded structure of an assembly structure shown in FIG. 6.

In this embodiment, referring to FIG. 7 mainly, in addition to a light incident surface S1, a light emergent surface S2, and a light reflective surface S3, the optical path turning element 301 further includes a transition surface S4, a transition surface S5, a transition surface S6, a transition surface S7, and a transition surface S8, to prevent a sharp corner from occurring on a surface of the optical path turning element 301, to prevent the optical path turning element 301 from scratching human hands or other devices during production, transportation, packaging, or mounting.

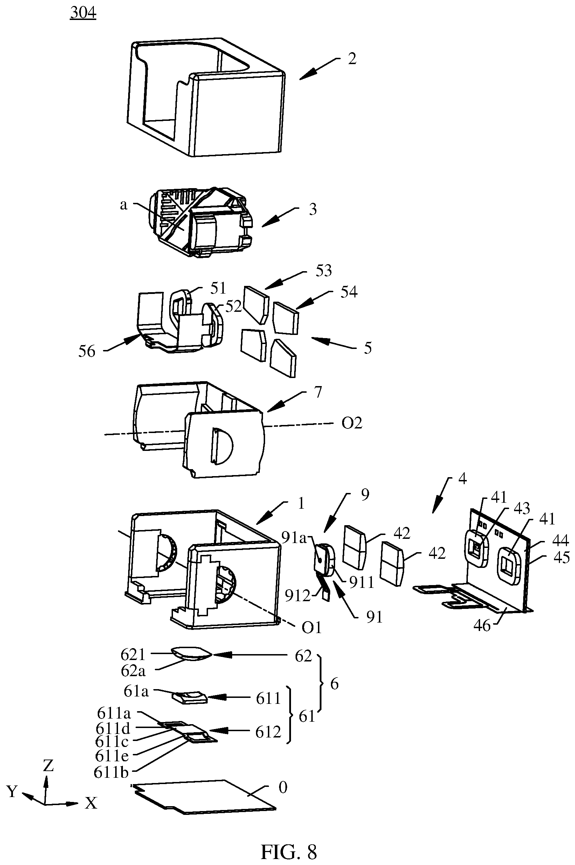

Referring to FIG. 8, FIG. 8 is a schematic diagram of an exploded structure of a driving motor 304 in an assembly structure shown in FIG. 7. The driving motor 304 includes a base body 1, a housing 2, a first carrier 3, a second carrier 7, a first driving assembly 4, a second driving assembly 5, a first braking assembly 6, and a second braking assembly 9.

The base body 1 is used as a support framework of the driving motor 304, and is configured to support and fix another structural member.

The housing 2 is connected to the base body 1 and is configured to protect an internal structure of the driving motor 304. A material of the housing 2 includes but is not limited to metal and plastic.

The first carrier 3 is located in the housing 2, and the first carrier 3 is configured to carry the optical path turning element 301. In some embodiments, referring to FIG. 8, the first carrier 3 has a support surface a, the optical path turning element 301 is supported on the support surface a, and the light reflective surface S3 of the optical path turning element 301 is opposite to the support surface a.

The first carrier 3 is connected to the base body 1, and can rotate about the first axis O1 and the second axis O2 relative to the base body 1.

In some embodiments, the first carrier 3 may be connected to the base body 1 by using an elastic member, and the elastic member may be a spring plate. When the first carrier 3 rotates about the first axis O1 and/or the second axis O2 relative to the base body 1, the elastic member may be forced to elastically deform and accumulate an elastic force. When the driving force for the first carrier 3 to move relative to the base body 1 disappears, the elastic force accumulated by the elastic member may drive the first carrier 3 to be reset. This structure is simple, and costs are low.

In another embodiment, referring to FIG. 8, the first carrier 3 may alternatively be connected to the base body 1 by using a plurality of stages of rotation assemblies. Specifically, the second carrier 7 is connected to the base body 1 rotatably about the first axis O1, and the first carrier 3 is connected to the second carrier 7 rotatably about the second axis O2.

The base body 1 and the second carrier 7 form a nodding rotation assembly, and the second carrier 7 and the first carrier 3 form a head swinging rotation assembly. Therefore, the first carrier 3 can rotate about the first axis O1 and the second axis O2 relative to the base body 1 by using the nodding rotation assembly and the head swinging rotation assembly. Compactness of the structure is relatively good, and the two stages of rotation assemblies separately move independently, which is beneficial to improving motion control precision.

The first driving assembly 4 is configured to drive the first carrier 3 to rotate about the first axis O1 relative to the base body 1. In some embodiments, referring to FIG. 8, the first driving assembly 4 is disposed between the base body 1 and the second carrier 7. The first driving assembly 4 is configured to drive the second carrier 7 to rotate about the first axis O1 relative to the base body 1, to drive the first carrier 3 to rotate about the first axis O1.

The second driving assembly 5 is configured to drive the first carrier 3 to rotate about the second axis O2 relative to the base body 1. In some embodiments, still referring to FIG. 8, the second driving assembly 5 is disposed between the second carrier 7 and the first carrier 3, and the second driving assembly 5 is configured to drive the first carrier 3 to rotate about the second axis O2 relative to the second carrier 7, to drive the first carrier 3 to rotate about the second axis O2.

The base body 1, the second carrier 7, and the first driving assembly 4 form a nodding activation apparatus, and the second carrier 7, the first carrier 3, and the second driving assembly 5 form a head swinging activation apparatus. Based on this, the following describes the nodding activation apparatus and the head swinging activation apparatus in detail with reference to the accompanying drawings.

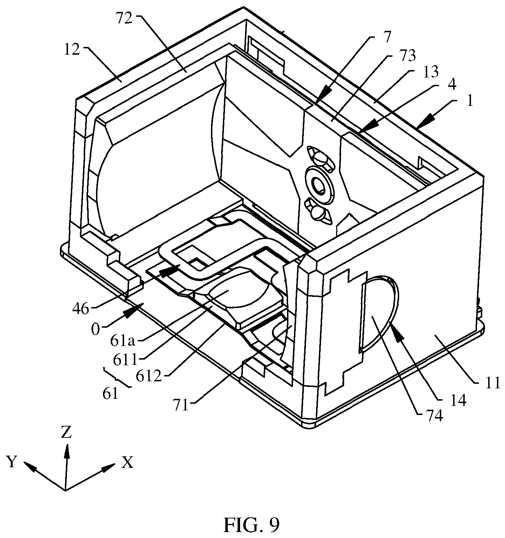

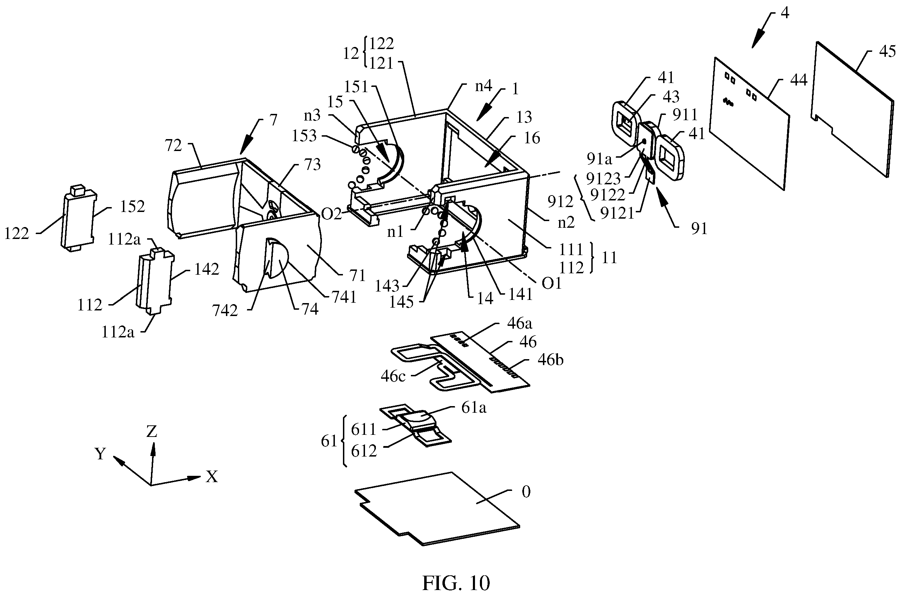

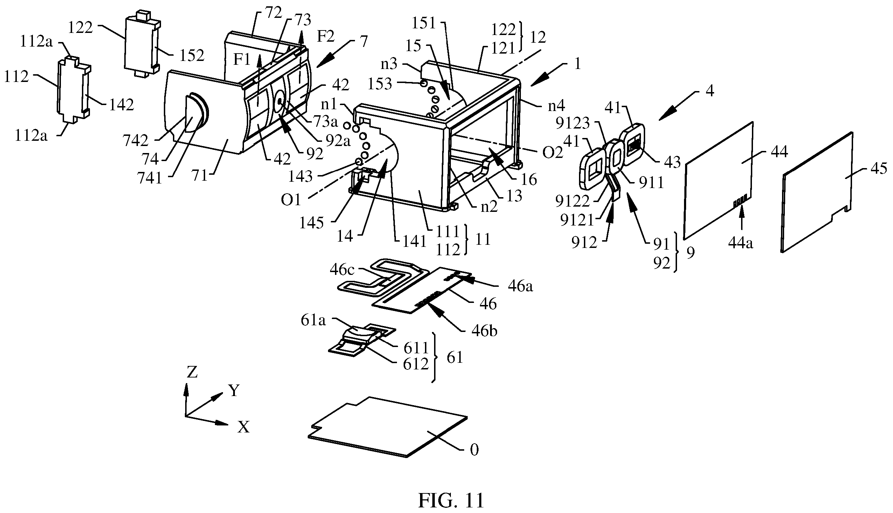

Referring to FIG. 9 to FIG. 11, FIG. 9 is an assembly diagram of a nodding activation apparatus in the driving motor 304 shown in FIG. 8, FIG. 10 is a schematic diagram of an exploded structure of the nodding activation apparatus shown in FIG. 9, and FIG. 11 is a schematic diagram of an exploded structure of the nodding activation apparatus shown in FIG. 10 from another viewing angle.

The base body 1 includes a first side wall 11, a second side wall 12, and a third side wall 13. The first side wall 11 and the second side wall 12 are arranged at an interval along the Y-axis direction and are disposed opposite to each other. The third side wall 13 is connected between the first side wall 11 and the second side wall 12.

The first side wall 11 is provided with a first semi-circular hole 14, and the second side wall 12 is provided with a second semi-circular hole 15. A circular centerline corresponding to the first semi-circular hole 14 and a circular centerline corresponding to the second semi-circular hole 15 are both collinear with the first axis O1.

In addition, referring to FIG. 10 and FIG. 11 mainly, an inner wall surface of the first semi-circular hole 14 includes a first circular arc surface 141 and a first plane 142 along a circumferential direction of the first semi-circular hole 14. A central angle corresponding to the first circular arc surface 141 may be 180°, may be greater than 180°, or may be less than 180°, which is not specifically limited herein. The first circular arc surface 141 and the first plane 142 are arranged along the X-axis direction.

Correspondingly, an inner wall surface of the second semi-circular hole 15 includes a second circular arc surface 151 and a second plane 152 along a circumferential direction of the second semi-circular hole 15. A central angle corresponding to the second circular arc surface 151 may be 180°, may be greater than 180°, or may be less than 180°, which is not specifically limited herein. The second circular arc surface 151 and the second plane 152 are arranged along the X-axis direction.

Based on the foregoing description, the second carrier 7 is provided with a first semi-circular shaft 74 and a second semi-circular shaft (not shown). In some embodiments, the second carrier 7 includes a fourth side wall 71, a fifth side wall 72, and a sixth side wall 73. The fourth side wall 71 and the fifth side wall 72 are arranged at an interval along the Y-axis direction and are disposed opposite to each other. The sixth side wall 73 is connected between the fourth side wall 71 and the fifth side wall 72.

The first semi-circular shaft 74 is disposed on a surface of the fourth side wall 71 facing away from the fifth side wall 72, and the second semi-circular shaft is disposed on a surface of the fifth side wall 72 facing away from the fourth side wall 71. A circular centerline corresponding to the first semi-circular shaft 74 is collinear with a circular centerline corresponding to the second semi-circular shaft.

The first semi-circular shaft 74 is accommodated in the first semi-circular hole 14 and is rotatable in the first semi-circular hole 14. The second semi-circular shaft is accommodated in the second semi-circular hole 15 and is rotatable in the second semi-circular hole 15.

In this way, the second carrier 7 is connected to the base body 1 rotatably about the first axis O1 through coordination between the first semi-circular shaft 74 and the first semi-circular hole 14 and coordination between the second semi-circular shaft and the second semi-circular hole 15. This structure is simple.

In addition, because the first circular arc surface 141 and the first plane 142 are arranged along the X-axis direction, and the second circular arc surface 151 and the second plane 152 are arranged along the X-axis direction, the first semi-circular hole 14 and the first semi-circular shaft 74, and the second semi-circular hole 15 and the second semi-circular shaft can be made in relatively large sizes, which can improve the support stability of the second carrier 7 on the base body 1.

In addition, sizes of the first semi-circular hole 14 and the first semi-circular shaft 74, and the second semi-circular hole 15 and the second semi-circular shaft in the X-axis direction are relatively small, so that the lengths of the base body 1 and the second carrier 7 in the X-axis direction can be reduced, and the driving motor 304 is miniaturized, and is conveniently mounted in an electronic device with limited internal space.

In another embodiment, disposition positions of the first semi-circular hole 14 and the first semi-circular shaft 74 may be interchanged. Specifically, the first semi-circular hole 14 is disposed on the fourth side wall 71, and the first semi-circular shaft 74 is disposed on the first side wall 11. Correspondingly, disposition positions of the second semi-circular hole 15 and the second semi-circular shaft may also be interchanged. Specifically, the second semi-circular hole 15 is disposed on the fifth side wall 72, and the second semi-circular shaft is disposed on the second side wall 12.

To enable the first semi-circular shaft 74 to rotate in the first semi-circular hole 14 and enable the second semi-circular shaft to rotate in the second semi-circular hole 15, there may be a gap between a side surface of the first semi-circular shaft 74 and an inner wall surface of the first semi-circular hole 14 and a gap between a side surface of the second semi-circular shaft and an inner wall surface of the second semi-circular hole 15.

Specifically, in some embodiments, referring to FIG. 10 and FIG. 11 mainly, along a circumferential direction of the first semi-circular shaft 74, the side surface of the first semi-circular shaft 74 includes a third circular arc surface 741 and a third plane 742.

The third circular arc surface 741 is opposite to the first circular arc surface 141, and a circular centerline corresponding to the third circular arc surface 741 is collinear with a circular centerline corresponding to the first circular arc surface 141.

The circular centerline corresponding to the first circular arc surface 141 is the circular centerline corresponding to the first semi-circular hole 14. According to the foregoing descriptions, the circular centerline corresponding to the first semi-circular hole 14 is collinear with the first axis O1. Therefore, the circular centerline corresponding to the third circular arc surface 741 and the circular centerline corresponding to the first circular arc surface 141 are both collinear with the first axis O1.

The third circular arc surface 741 rotates about the first axis O1 relative to the first circular arc surface 141, so that the first semi-circular shaft 74 rotates about the first axis O1 in the first semi-circular hole 14. The structure is simple and is convenient to operate.

Based on the foregoing description, the third plane 742 and the first plane 142 are disposed opposite to each other at an interval. A gap is provided between the third plane 742 and the first plane 142, and the gap is used for avoiding the first semi-circular shaft 74 in a process in which the first semi-circular shaft 74 rotates.

Similarly, along a circumferential direction of the second semi-circular shaft, a side surface of the second semi-circular shaft includes a fourth circular arc surface and a fourth plane.

The fourth circular arc surface is opposite to the second circular arc surface 151, and a circular centerline corresponding to the fourth circular arc surface is collinear with a circular centerline corresponding to the second circular arc surface 151.

The fourth circular arc surface rotates about the first axis O1 relative to the second circular arc surface 151, so that the second semi-circular shaft rotates about the first axis O1 in the second semi-circular hole 15. The structure is simple and is convenient to operate.

Based on the foregoing description, the fourth plane and the second plane 152 are disposed opposite to each other at an interval. Similarly, a gap is provided between the fourth plane and the second plane 152, and the gap is used for avoiding the second semi-circular shaft in a process in which the second semi-circular shaft rotates.

The first side wall 11 and the second side wall 12 may be an integral structural member, or may be formed by assembling a plurality of parts. In some embodiments, referring to FIG. 10 and FIG. 11, the first side wall 11 includes a first side wall body 111 and a first limiting member 112.

Two ends of the first side wall body 111 along the length direction of the second axis O2 are respectively a first end n1 and a second end n2. The first end n1 is provided with a notch that is sunken toward the second end n2. The notch includes a first notch part and a second notch part.

The second notch part is located on a side of the first notch part away from the first end n1, the second notch part is the first semi-circular hole 14, and an inner wall surface of the first side wall body 111 defining the second notch part forms the first circular arc surface 141.

A minimum width of the first notch part in a first direction (that is, the Z-axis direction) is greater than or equal to a maximum width of the second notch part in the Z-axis direction.

In this way, the first semi-circular shaft 74 may be mounted to the second notch part through the first notch part.

Based on the foregoing description, the first limiting member 112 is fixed in the first notch part, and at least a partial region of an end face of an end of the first limiting member 112 that faces the second notch part forms the first plane 142.

Specifically, the first limiting member 112 may be fixed in the first notch part in a manner such as bonding, clamping, or threaded connection. Optionally, referring to FIG. 10 and FIG. 11, edges of two ends of the first notch part along the Z-axis direction are provided with clamping grooves 145, and two ends of the first limiting member 112 along the Z-axis direction are provided with clamping projections 112a. The first limiting member 112 is accommodated in the first notch part, and the clamping projections 112a are fixed in the clamping grooves 145.

In this way, after the first semi-circular shaft 74 and the first ball 143 are mounted to the second notch part through the first notch part, the first limiting member 112 may be fixed in the first notch part, to implement stopping or limiting. The mounting difficulty is relatively low, and the yield is relatively good.

Similarly, still referring to FIG. 10 and FIG. 11, the second side wall 12 may include a second side wall body 121 and a second limiting member 122.

Two ends of the second side wall body 121 along the length direction of the second axis O2 are respectively a third end n3 and a fourth end n4. The third end n3 is provided with a notch that is sunken toward the fourth end n4. The notch includes a third notch part and a fourth notch part.

The fourth notch part is located on a side of the third notch part away from the third end n3, the fourth notch part is the second semi-circular hole 15, and an inner wall surface of the second side wall body 121 defining the third notch part forms the second circular arc surface 151.

A minimum width of the third notch part in the Z-axis direction is greater than or equal to a maximum width of the fourth notch part in the Z-axis direction.

In this way, the second semi-circular shaft may be mounted to the fourth notch part through the third notch part.

Based on the foregoing description, the second limiting member 122 is fixed in the third notch part, and at least a partial region of an end face of an end of the second limiting member 122 that faces the fourth notch part forms the second plane 152.

A manner of fixing the second limiting member 122 in the third notch part may be the same as the foregoing manner of fixing the first limiting member 112 in the first notch part. Details are not described herein again.

In this way, after the second semi-circular shaft is mounted to the fourth notch part through the third notch part, the second limiting member 122 may be fixed in the third notch part, to implement stopping or limiting. The mounting difficulty is relatively low, and the yield is relatively good.

Based on the foregoing description, specifically, the third side wall 13 is connected between the first side wall body 111 and the second side wall body 121. In some embodiments, the third side wall 13, the first side wall body 111, and the second side wall body 121 may be an integral structural member. In this way, the nodding activation apparatus includes few parts, and is low in costs and high in assembly efficiency.

There is sliding friction or rolling friction between the third circular arc surface 741 and the first circular arc surface 141, and between the fourth circular arc surface and the second circular arc surface 151.

In some embodiments, still referring to FIG. 10 and FIG. 11, at least one first ball 143 is disposed between the first circular arc surface 141 and the third circular arc surface 741. Specifically, there may be six first balls 143. Certainly, there may alternatively be another quantity of first balls 143. Similarly, at least one second ball 153 is disposed between the second circular arc surface 151 and the fourth circular arc surface. Specifically, there may be six second balls 153. Certainly, there may alternatively be another quantity of second balls 153.

In this way, rolling friction is implemented between the third circular arc surface 741 and the first circular arc surface 141 by using the first ball 143, and rolling friction is implemented between the fourth circular arc surface and the second circular arc surface 151 by using the second ball 153. The rolling friction has a relatively low friction force and relatively low wear, which is beneficial to prolonging the service life of a nodding activation apparatus.

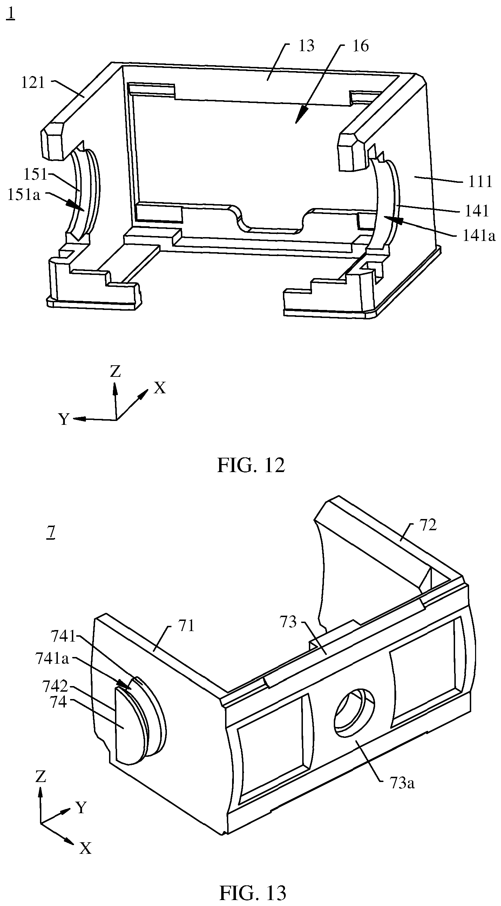

Referring to FIG. 12, FIG. 12 is a three-dimensional diagram of a partial structure of a base body 1 in the nodding activation apparatus shown in FIG. 10 and FIG. 11.

The first circular arc surface 141 is provided with a first limiting groove 141a, and the first limiting groove 141a extends along an arc-shaped contour line of the first circular arc surface 141. The foregoing at least one first ball 143 is disposed between the first limiting groove 141a and the third circular arc surface 741. Moreover, the second circular arc surface 151 is provided with a second limiting groove 151a, and the second limiting groove 151a extends along an arc-shaped contour line of the second circular arc surface 151. The foregoing second ball 153 is disposed between the second limiting groove 151a and the fourth circular arc surface.

In this way, the first ball 143 may be limited by using the first limiting groove 141a, and the second ball 153 may be limited by using the second limiting groove 151a, so that the first ball 143 and the second ball 153 can be prevented from falling off.

In some embodiments, still referring to FIG. 12, the first limiting groove 141a runs through a surface of the first side wall 11 that faces the second side wall 12 along a length direction of the first axis O1. Specifically, still referring to FIG. 12, the first limiting groove 141a runs through a surface of the first side wall body 111 that faces the second side wall body 121 along the length direction of the first axis O1.

In another embodiment, alternatively, the second limiting groove 151a may run through a surface of the second side wall 13 that faces the first side wall 12 along the length direction of the first axis O1.

In this way, fault tolerance rates of mounting between the first semi-circular shaft 74 and the first semi-circular hole 14 and between the second semi-circular shaft and the second semi-circular hole 15 along the length direction of the first axis O1 can be improved, to avoid a phenomenon of incapability of assembly due to size deviation, thereby reducing the mounting difficulty and improving the mounting efficiency.

Based on the foregoing description, optionally, referring to FIG. 13, FIG. 13 is a three-dimensional diagram of a second carrier 7 in the nodding activation apparatus shown in FIG. 10 and FIG. 11. The third circular arc surface 741 is provided with a third limiting groove 741a, and the third limiting groove 741a extends along an arc-shaped contour line of the third circular arc surface 741. The foregoing first ball 143 is disposed between the first limiting groove 141a and the third limiting groove 741a. Moreover, the foregoing fourth circular arc surface is provided with a fourth limiting groove, and the fourth limiting groove extends along an arc-shaped contour line of the fourth circular arc surface. The foregoing second ball 153 is disposed between the second limiting groove 151a and the fourth limiting groove.

In this way, the first ball 143 is limited through cooperation between the first limiting groove 141a and the third limiting groove 741a, and the second ball 153 is limited through cooperation between the second limiting groove 151a and the fourth limiting groove, so that the first ball 143 and the second ball 153 can be further prevented from falling off.

The third limiting groove 741a and the fourth limiting groove include, but are not limited to, a V-shaped groove and an inverted trapezoidal groove, which is not specifically limited herein. In some embodiments, the third limiting groove 741a and the fourth limiting groove are both V-shaped grooves.

In some embodiments, referring back to FIG. 11, a surface of the second carrier 7 that faces the third side wall 13 includes the first convex arc surface 73a. Optionally, the first convex arc surface 73a is disposed on a surface, facing the third side wall 13, of the sixth side wall 73. The first convex arc surface 73a projects toward the third side wall 13, and a circular centerline corresponding to the first convex arc surface 73a is parallel to or collinear with the first axis O1.

In this way, when the second carrier 7 rotates about the first axis O1 relative to the base body 1, avoidance space required for rotation of the second carrier 7 is relatively small, which is beneficial to reducing the volume of the driving motor 304 and improving structural compactness. In addition, on the premise that the volume of the driving motor 304 is specified, the rotation angle of the first carrier 3 relative to the second carrier 7 can be increased, thereby increasing the maximum tracking angle of the camera module.

Referring back to FIG. 10 and FIG. 11, the first driving assembly 4 includes a first coil 41, a first magnet 42, a first driving chip 43, a first circuit board 44, a first reinforcing board 45, and a second circuit board 46.

In some embodiments, there are two first coils 41, and the two first coils 41 are disposed on the third side wall 13. Certainly, there may alternatively be one or at least three first coils 41. This embodiment provides descriptions by using an example in which there are two first coils 41. This cannot be considered to constitute a special limitation on this application.

The first coil 41 may be directly disposed on the third side wall 13, or may be disposed on another structure that is fixed to the third side wall 13.

In some embodiments, referring to FIG. 10 and FIG. 11, the third side wall 13 is provided with an opening 16, and the first circuit board 44 is disposed on a side of the third side wall 13 facing away from the second carrier 7 and covers the opening 16. The first circuit board 44 includes but is not limited to a printed circuit board (printed circuit board, PCB), a flexible printed circuit (flexible printed circuit, FPC), or a board-shaped structure formed by braiding a flexible material and a wire.

Based on the foregoing description, the first reinforcing board 45 is disposed on a surface, facing away from the opening 16, of the first circuit board 44, and is configured to reinforce the first circuit board 44. A material of the first reinforcing board 45 includes, but is not limited to, a metal such as iron, an iron alloy, aluminum, an aluminum alloy, a titanic alloy, or a magnesium-aluminum alloy, or plastic. In another embodiment, when the strength of the first circuit board 44 is sufficient, the first reinforcing board 45 may not be disposed.

At least a part of the first coil 41 is accommodated in the opening 16, and the first coil 41 is fixed and electrically connected to the first circuit board 44.

In this way, the first coil 41 is disposed on the first circuit board 44 that is fixed to the third side wall 13. Therefore, an electrical connection between the first coil 41 and the first circuit board 44 is facilitated; and the first coil 41 is avoided by using the opening 16, so that a thickness of the whole formed by the first coil 41 and the third side wall 13 in the X-axis direction can be reduced, structural compactness is improved, and the volume of the driving motor 304 is reduced.

Based on the foregoing description, referring to FIG. 10 mainly, there may be two first magnets 42, and the two first magnets 42 are disposed on the sixth side wall 73.

One first magnet 42 of the two first magnets 42 is opposite to one first coil 41 of the two first coils 41, and when the one first coil 41 is powered on, a first ampere force F1 along the Z-axis direction is generated.

The other first magnet 42 of the two first magnets 42 is opposite to the other first coil 41 of the two first coils 41, and when the other first coil 41 is powered on, a second ampere force F2 along the Z-axis direction is generated.

Directions of the first ampere force F1 and the second ampere force F2 are the same, and distances from the first ampere force F1 and the second ampere force F2 to the first axis O1 are greater than 0, so that two driving torques that are in the same direction are generated, to drive the second carrier 7 to rotate about the first axis O1 relative to the base body 1. In this way, the driving torque is relatively large, and the driving efficiency is relatively good.

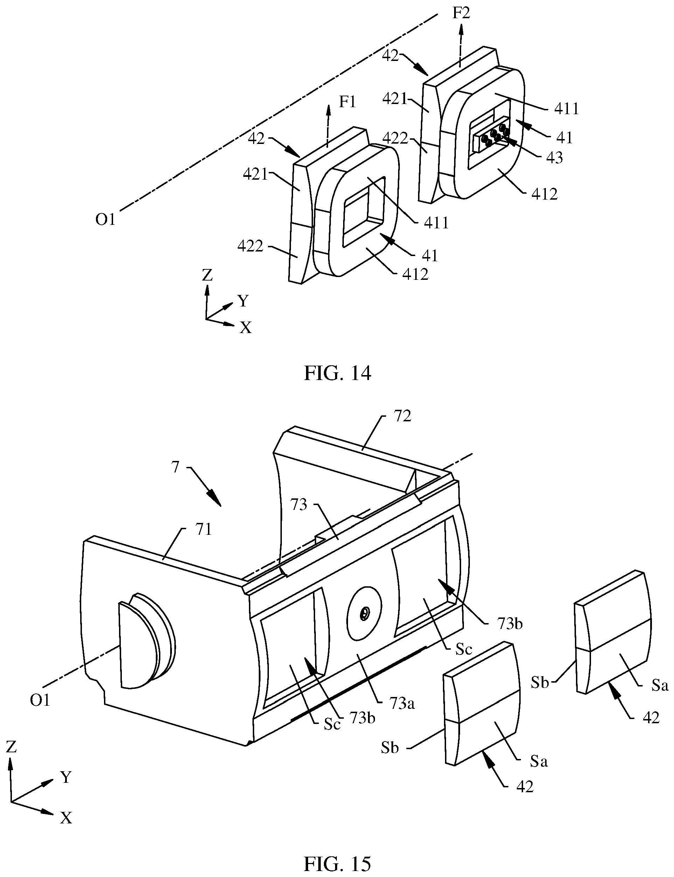

Specifically, referring to FIG. 14, FIG. 14 is a diagram of structure and force analysis of a first driving assembly 4 in the nodding activation apparatus shown in FIG. 10 and FIG. 11. The first magnet 42 includes a first magnet unit 421 and a second magnet unit 422 that are arranged along the Z-axis direction.

The first magnet unit 421 and the second magnet unit 422 are both magnetized along the X-axis direction, that is, N poles and S poles of the first magnet unit 421 and the second magnet unit 422 are arranged along the X-axis direction.

A magnetizing direction of the second magnet unit 422 is opposite to the magnetizing direction of the first magnet unit 421.

Based on the foregoing description, the first coil 41 includes a first side 411 and a second side 412 that are opposite to each other, and the first side 411 and the second side 412 are parallel to the Y-axis direction. The first side 411 is opposite to the first magnet unit 421, and the second side 412 is opposite to the second magnet unit 422. When the first coil 41 is powered on, the first magnet unit 421 and the second magnet unit 422 are subject to ampere forces that are upward or downward along the Z axis, and directions of the ampere forces to which the first magnet unit 421 and the second magnet unit 422 are subject are the same. Based on this, the first ampere force F1 is a resultant force of the ampere forces to which the first magnet unit 421 and the second magnet unit 422 are subject in one of the first magnets 42, and the second ampere force F2 is a resultant force of the ampere forces to which the first magnet unit 421 and the second magnet unit 422 are subject in the other of the first magnets 42.

The driving assembly including the first coil 41 and the first magnet 42 is simple to control, and has a relatively large driving force. In another embodiment, the driving assembly including the first coil 41 and the first magnet 42 may alternatively be replaced with another driving assembly such as a shape memory alloy (shape memory alloy, SMA), which is not specifically limited herein.

It should be noted that disposition positions of the first coil 41 and the first magnet 42 may be interchanged. Specifically, the first coil 41 may be disposed on the sixth side wall 73, and the first magnet 42 is disposed on the third side wall 13, which is not specifically limited herein.

In some embodiments, referring to FIG. 10 and FIG. 15 together, FIG. 15 is a schematic diagram of an exploded structure of a second carrier 7 and a first magnet 42 in the nodding activation apparatus shown in FIG. 10. The first convex arc surface 73a is provided with two first sunken grooves 73b. The two first magnets 42 are respectively disposed in the two first sunken grooves 73b. In this way, the two first magnets 42 can be prevented from projecting out of the surface of the second carrier 7, and can be prevented from interfering with the first coil 41 and the base body 1, and structural compactness can be ensured.

The first magnet 42 includes a first surface Sa and a second surface Sb.

The first surface Sa faces the third side wall 13, the first surface Sa is a circular arc surface projecting toward the third side wall 13, and a circular centerline corresponding to the circular arc surface is parallel to or collinear with the first axis O1.

The first surface Sa may be flush with the first convex arc surface 73a, or may have a height difference with the first convex arc surface 73a.

In this way, relatively small avoidance space is needed in a process in which the second carrier 7 rotates about the first axis O1. On the premise that a maximum rotation angle of the second carrier 7 is specified, the driving motor 304 has the volume reduced, and can be mounted in the electronic device 100 with limited space. On the premise that the volume of the driving motor 304 is specified, the maximum rotation angle of the second carrier 7 can be increased, to implement large-angle tracking.

Based on the foregoing description, optionally, referring to FIG. 15 mainly, the second surface Sb faces away from the first surface Sa, and the second surface Sb is a plane.

In this way, a bottom surface Sc of the first sunken groove 73b may be set as a plane, a forming process of the plane is simple, and the yield is relatively high, so that production costs of the second carrier 7 can be reduced.

Referring back to FIG. 10 and FIG. 11, the first driving chip 43 is disposed on the first circuit board 44, and is electrically connected to the two first coils 41 by using the first circuit board 44.

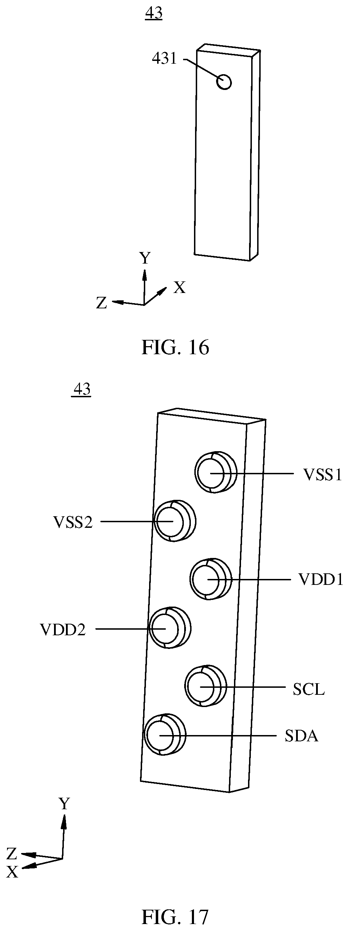

Referring to FIG. 16, FIG. 16 is a schematic structural diagram of a surface, facing a first magnet 42, of a first driving chip 43 in the nodding activation apparatus shown in FIG. 10 and FIG. 11.

The first driving chip 43 is integrated with a first Hall device 431. The first Hall device 431 cooperates with the first magnet 42, and can detect a rotation angle of the second carrier 7 relative to the base body 1, to generate a first rotation angle signal. The first rotation angle signal is used for implementing closed-loop control on the first driving assembly 4.

Referring to FIG. 17, FIG. 17 is a schematic structural diagram of a surface, facing a first circuit board 44, of a first driving chip 43 in the nodding activation apparatus shown in FIG. 10 and FIG. 11. The first driving chip 43 may include a power output terminal VSS2, a ground output terminal VDD2, a first power input terminal VSS1, a first ground input terminal VDD1, a first serial data terminal SDA, and a first serial clock terminal SCL. By using the first circuit board 44, the two first coils 41 may be connected in series or in parallel between two ends of the power output terminal VSS2 and the ground output terminal VDD2, to drive the two first coils 41.

The first power supply input terminal VSS1 and the first ground input terminal VDD1 are configured to input a first power signal. The first serial data terminal SDA and the first serial clock terminal SCL are configured to input a first control signal and output a first rotation angle signal. The first driving chip 43 is configured to determine a magnitude of a current outputted by the power output terminal VSS2 and the ground output terminal VDD2 and a current output time according to the first power signal and the first control signal, thereby achieving an objective of driving and control.

Based on the foregoing description, referring back to FIG. 11, a first port 44a is provided on the first circuit board 44. The first port 44a includes four pins that are respectively a pin 1 to a pin 4. The four pins are respectively electrically connected to the first power input terminal VSS1, the first ground input terminal VDD1, the first serial data terminal SDA, and the first serial clock terminal SCL of the first circuit board 44.

Further, still referring to FIG. 11, a second port 46a and a third port 46b that are electrically connected to each other are disposed on the second circuit board 46. The second port 46a is electrically connected to the first port 44a of the first circuit board 44, and the third port 46b is electrically connected to a controller (not shown). Therefore, the first circuit board 44 is further electrically connected to the controller by using the second circuit board 46, to receive the first power signal and the first control signal from the controller, and output the first rotation angle signal to the controller 0. The controller may generate the foregoing first control signal according to the first rotation angle signal. The deployment is proper, and the structural stability is good.

The controller may be included in the foregoing circuit board assembly 40, or may be disposed on a circuit board that is on the camera module 30 and that is configured to carry the photosensitive device 303, which is not specifically limited herein.

In the foregoing embodiment, the second circuit board 46 includes, but is not limited to, a PCB, an FPC, or a board-shaped structure formed by braiding a flexible material and a wire. Referring to FIG. 9 and FIG. 11 together, the second circuit board 46 is carried on a support board 0, and the support board 0 is fixed on the base body 1. In this way, the second circuit board 46 is supported and reinforced by using the support board 0. The support board 0 includes, but is not limited to, a metal board, a plastic board, and a PCB board.

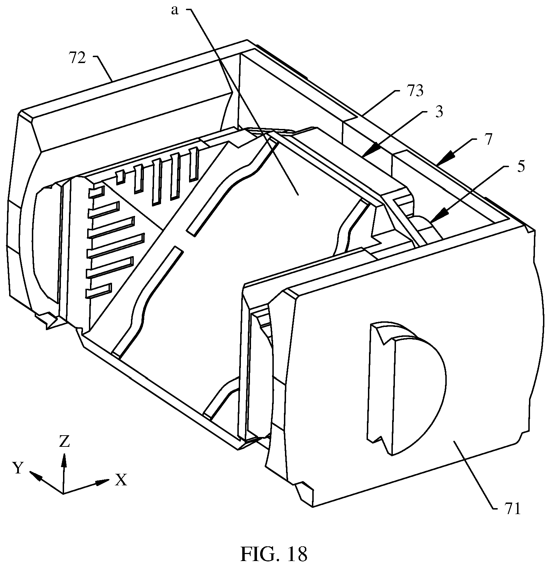

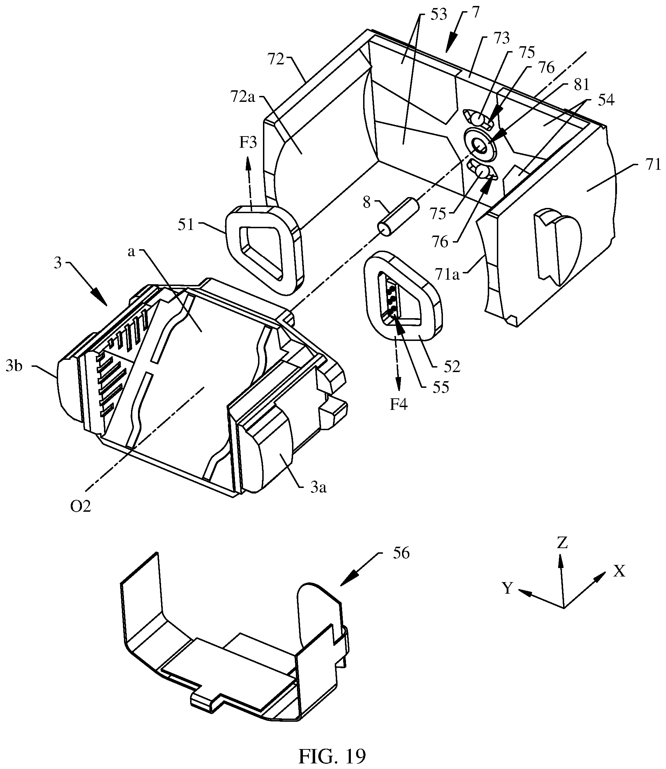

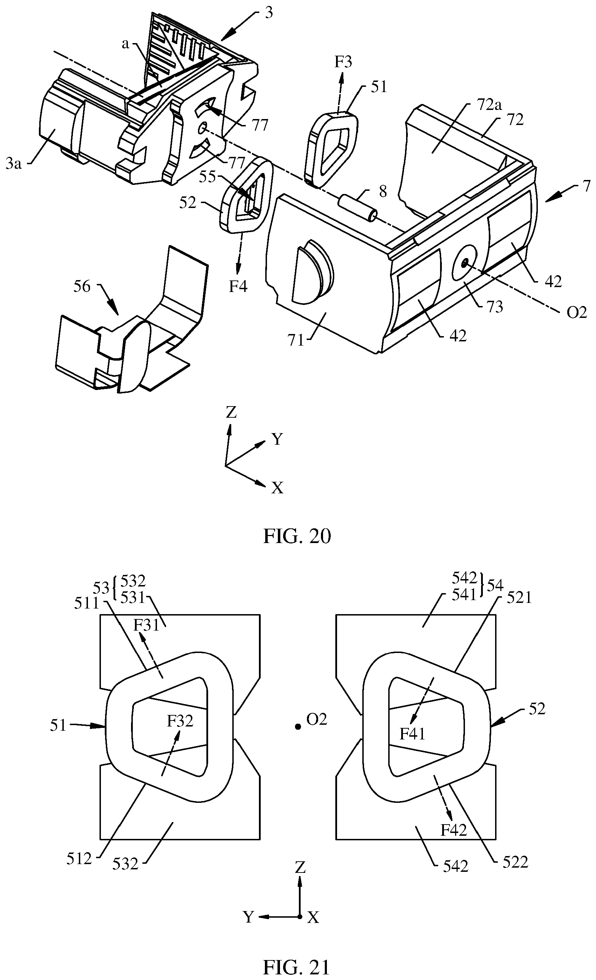

Referring to FIG. 18 to FIG. 20, FIG. 18 is an assembly diagram of a head swinging activation apparatus in the driving motor 304 shown in FIG. 8, FIG. 19 is a schematic diagram of an exploded structure of the head swinging activation apparatus shown in FIG. 18, and FIG. 20 is a schematic diagram of an exploded structure of the head swinging activation apparatus shown in FIG. 19 from another viewing angle.

The first carrier 3 is disposed between the fourth side wall 71 and the fifth side wall 72, and a rotating shaft 8 is rotatably connected to the sixth side wall 73. In some embodiments, the rotating shaft 8 is rotatably connected to the sixth side wall 73 by using a bearing 81. An axis of the rotating shaft 8 is collinear with the second axis O2, and the first carrier 3 is connected to the rotating shaft 8.

In this way, constrained by the rotating shaft 8, the rotational motion of the first carrier 3 relative to the second carrier 7 has relatively high precision and relatively good reliability.

In the foregoing embodiment, there may be sliding friction or rolling friction between the first carrier 3 and the sixth side wall 73.

In some embodiments, referring to FIG. 19 mainly, a third ball 75 is disposed between the first carrier 3 and the sixth side wall 73. Rolling friction is implemented between the first carrier 3 and the sixth side wall 73 by using the third ball 75. The rolling friction has a relatively low friction force and relatively low wear, which is beneficial to prolonging the service life of a head swinging activation apparatus.

There may be one or more third balls 75. In some embodiments, still referring to FIG. 19, there are two third balls 75. The two third balls 75 are disposed on two opposite sides of the rotating shaft 8, and are disposed symmetrically about the rotating shaft 8. In this way, support stability for the first carrier 3 can be ensured, to prevent the first carrier 3 from being skewed or stuck. In another embodiment, there may be three or more third balls 75. These third balls 75 are uniformly disposed around the circumference of the rotating shaft 8, to further improve support stability for the first carrier 3.

In some embodiments, still referring to FIG. 19, a surface of the sixth side wall 73 that faces the first carrier 3 is provided with a first circular-arc-shaped limiting groove 76, and a circular centerline corresponding to an extension path of the first circular-arc-shaped limiting groove 76 is collinear with the second axis O2. On the basis of this, at least a part of the third ball 75 is located in the first circular-arc-shaped limiting groove 76. In this way, the third ball 75 may be limited by using the first circular-arc-shaped limiting groove 76, to prevent the third ball 75 from falling off.

Based on the foregoing description, optionally, referring to FIG. 20 mainly, a surface of the first carrier 3 that faces the sixth side wall 73 is provided with a second circular-arc-shaped limiting groove 77, and the second circular-arc-shaped limiting groove 77 is opposite to the first circular-arc-shaped limiting groove 76. A circular centerline corresponding to an extension path of the second circular-arc-shaped limiting groove 77 is collinear with the second axis O2. On the basis of this, at least a part of the third ball 75 is located in the second circular-arc-shaped limiting groove 77. In this way, the third ball 75 may be further limited by using the second circular-arc-shaped limiting groove 77, to prevent the third ball 75 from falling off.

In some embodiments, still referring to FIG. 19 and FIG. 20, a surface of the first carrier 3 that faces the fourth side wall 71 is a second convex arc surface 3a, the second convex arc surface 3a projects toward the fourth side wall 71, and a circular centerline corresponding to the second convex arc surface 3a is parallel to or collinear with the second axis O2. On the basis of this, a surface of the fourth side wall 71 that faces the first carrier 3 is a first concave arc surface 71a, the first concave arc surface 71a is concave in a direction away from the first carrier 3, and a circular centerline corresponding to the first concave arc surface 71a is parallel to or collinear with the second axis O2. The first concave arc surface 71a faces the second convex arc surface 3a.

In this way, when the first carrier 3 rotates about the second axis O2 relative to the second carrier 7, the second convex arc surface 3a rotates in the first concave arc surface 71a. Relatively small space is needed for rotation of the first carrier 3, which is beneficial to reducing the volume of the driving motor 304. In addition, on the premise that the volume of the driving motor 304 is specified, the rotation angle of the first carrier 3 relative to the second carrier 7 can be increased, thereby increasing the maximum tracking angle of the camera module.

Similarly, still referring to FIG. 19 and FIG. 20, a surface of the first carrier 3 that faces the fifth side wall 72 is a third convex arc surface 3b. The third convex arc surface 3b projects toward the fifth side wall 72, and a circular centerline corresponding to the third convex arc surface 3b is parallel to or collinear with the second axis O2. On the basis of this, a surface of the fifth side wall 72 that faces the first carrier 3 is a second concave arc surface 72a, the second concave arc surface 72a is concave in the direction away from the first carrier 3, and a circular centerline corresponding to the second concave arc surface 72a is parallel to or collinear with the second axis O2. The second concave arc surface 72a faces the third convex arc surface 3b.

In this way, when the first carrier 3 rotates about the second axis O2 relative to the second carrier 7, the third convex arc surface 3b rotates in the second concave arc surface 72a. Relatively small space is needed for rotation of the first carrier 3, which is beneficial to reducing the volume of the driving motor 304. In addition, on the premise that the volume of the driving motor 304 is specified, the rotation angle of the first carrier 3 relative to the second carrier 7 can be increased, thereby increasing the maximum tracking angle of the camera module.

Based on the foregoing description, still referring to FIG. 19 and FIG. 20, the second driving assembly 5 includes a second coil 51, a third coil 52, a second magnet 53, a third magnet 54, a second driving chip 55, and a third circuit board 56.

The second coil 51 and the third coil 52 are disposed on a surface of the first carrier 3 that faces the sixth side wall 73, and the second coil 51 and the third coil 52 are located on two opposite sides of the rotating shaft 8 and are symmetrically disposed about the rotating shaft 8.

The second magnet 53 and the third magnet 54 are disposed on a surface of the sixth side wall 73 that faces the first carrier 3, the second magnet 53 is opposite to the second coil 51, and the third magnet 54 is opposite to the third coil 52.

The second magnet 53 cooperates with the second coil 51 to generate a third ampere force F3 in the Z-axis direction, and the third magnet 54 cooperates with the third coil 52 to generate a fourth ampere force F4 in the Z-axis direction.

A direction of the third ampere force F3 is opposite to that of the fourth ampere force F4, and a distance between the third ampere force F3 and the second axis O2 and a distance between the fourth ampere force F4 and the second axis O2 are both greater than 0. Therefore, directions of generated torques are the same, and the first carrier 3 can be driven to rotate about the second axis O2 relative to the second carrier 7.

The driving assembly including the second coil 51, the third coil 52, the second magnet 53, and the third magnet 54 is simple to control, and has a relatively large driving force. In another embodiment, the driving assembly including the second coil 51, the third coil 52, the second magnet 53, and the third magnet 54 may alternatively be replaced with another driving assembly such as a shape memory alloy (shape memory alloy, SMA), which is not specifically limited herein.

It should be noted that disposition positions of the second coil 51 and the second magnet 53 may be interchanged. Specifically, the second coil 51 may be disposed on a surface of the sixth side wall 73 that faces the first carrier 3, and the second magnet 53 is disposed on a surface of the first carrier 3 that faces the sixth side wall 73. Similarly, disposition positions of the third coil 52 and the third magnet 54 may also be interchanged. Specifically, the third coil 52 may be disposed on a surface of the sixth side wall 73 that faces the first carrier 3, and the third magnet 54 is disposed on a surface of the first carrier 3 that faces the sixth side wall 73.

It should be noted that, in another embodiment, alternatively, the third coil 52 and the third magnet 54 may not be disposed, and the first carrier 3 is driven to rotate about the second axis O2 relative to the second carrier 7 only through cooperation between the second coil 51 and the second magnet 53, which is not specifically limited herein.

In some embodiments, still referring to FIG. 19 and FIG. 20, winding paths of the second coil 51 and the third coil 52 are each in a shape of an isosceles trapezoid, the isosceles trapezoid includes a top side, a bottom side, and two oblique sides connected between the top side and the bottom side, and a top side of the isosceles trapezoid is located on a side, away from the rotating shaft 8, of a bottom side of the isosceles trapezoid.

In this way, a height of one end of the second coil 51 and a height of one end of the third coil 52 close to the rotating shaft 8 in the Z-axis direction are relatively large, and a height of one end of the second coil 51 and a height of one end of the third coil 52 away from the rotating shaft 8 in the Z-axis direction are relatively small. Therefore, avoidance space required by the second coil 51 and the third coil 52 when the first carrier 3 rotates relative to the second carrier 7 can be reduced, which is beneficial to improving structural compactness and reducing the volume of the driving motor 304. On the premise that the volume of the driving motor 304 is specified, the maximum angle by which the first carrier 3 swings about the second axis O2 can be increased, thereby improving the tracking angle.

The following focuses on specific structures of the second coil 51, the third coil 52, the second magnet 53, and the third magnet 54.

Referring to FIG. 21, FIG. 21 is a schematic diagram of relative positions of a second coil 51, a third coil 52, a second magnet 53, and a third magnet 54 in the head swinging driving apparatus shown in FIG. 20.

The second coil 51 includes a first oblique side 511 and a second oblique side 512 that are opposite to each other.

The second magnet 53 includes a third magnet unit 531 and a fourth magnet unit 532, and the third magnet unit 531 and the fourth magnet unit 532 are arranged along the Z-axis direction. A magnetizing direction of the third magnet unit 531 and a magnetizing direction of the fourth magnet unit 532 are both parallel to the length direction of the second axis O2, and the magnetizing direction of the third magnet unit 531 is opposite to the magnetizing direction of the fourth magnet unit 532.

Based on the foregoing description, the first oblique side 511 is opposite to the third magnet unit 531, and the second oblique side 512 is opposite to the fourth magnet unit 532. When the second coil 51 is powered on, the first oblique side 511 cooperates with the third magnet unit 531 to generate an ampere force F31, the second oblique side 512 cooperates with the fourth magnet unit 532 to generate an ampere force F32, and a sum of a component force of the ampere force F31 in the Z-axis direction and a component force of the ampere force F32 in the Z-axis direction is the third ampere force F3 in FIG. 19 and FIG. 20. The structure is simple and has a relatively large driving force.

Correspondingly, still referring to FIG. 21, the third coil 52 includes a third oblique side 521 and a fourth oblique side 522 that are opposite to each other.

The third magnet 54 includes a fifth magnet unit 541 and a sixth magnet unit 542, and the fifth magnet unit 541 and the sixth magnet unit 542 are arranged along the Z-axis direction. A magnetizing direction of the fifth magnet unit 541 and a magnetizing direction of the sixth magnet unit 542 are both parallel to the length direction of the second axis O2, and the magnetizing direction of the fifth magnet unit 541 is opposite to the magnetizing direction of the sixth magnet unit 542.

Based on the foregoing description, the third oblique side 521 is opposite to the fifth magnet unit 541, and the fourth oblique side 522 is opposite to the sixth magnet unit 542. When the second coil 51 is powered on, the third oblique side 521 cooperates with the fifth magnet unit 541 to generate an ampere force F41, the fourth oblique side 522 cooperates with the sixth magnet unit 542 to generate an ampere force F42, and a sum of a component force of the ampere force F41 in the Z-axis direction and a component force of the ampere force F42 in the Z-axis direction is the fourth ampere force F4 in FIG. 19 and FIG. 20.

It may be known that still referring to FIG. 21, in a process in which the first carrier 3 rotates about the second axis O2 relative to the second carrier 7, it should be avoided that both the first oblique side 511 and the second oblique side 512 are opposite to the third magnet unit 531, and it should also be avoided that both the first oblique side 511 and the second oblique side 512 are opposite to the fourth magnet unit 532. Otherwise, the component force of the ampere force F31 in the Z-axis direction and the component force of the ampere force F32 in the Z-axis direction are opposite to each other, and cancel each other out, so that the first carrier 3 cannot be effectively driven to rotate. Similarly, still referring to FIG. 21, in a process in which the first carrier 3 rotates about the second axis O2 relative to the second carrier 7, it should be avoided that both the third oblique side 521 and the fourth oblique side 522 are opposite to the fifth magnet unit 541, and it should also be avoided that both the third oblique side 521 and the fourth oblique side 522 are opposite to the sixth magnet unit 542. Otherwise, the component force of the ampere force F41 in the Z-axis direction and the component force of the ampere force F42 in the Z-axis direction are opposite to each other, and cancel each other out, so that the first carrier 3 cannot be effectively driven to rotate.

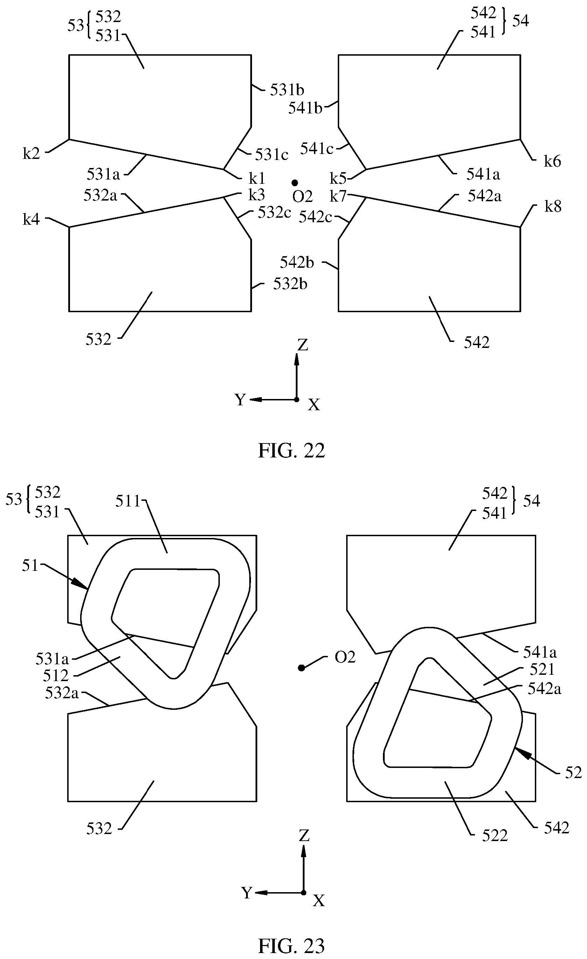

To achieve the foregoing objective, referring to FIG. 22, FIG. 22 is a schematic structural diagram of a first magnet 53 and a second magnet 54 in the assembly shown in FIG. 21. A side surface of the third magnet unit 531 that faces the fourth magnet unit 532 is a first slope 531a. On the basis of this, an edge of the first slope 531a that faces the second axis O2 is defined as a first edge k1, and an edge of the first slope 531a that faces away from the second axis O2 is defined as a second edge k2. From the first edge k1 to the second edge k2, the first slope 531a is inclined in a direction away from the fourth magnet unit 532.
still referring to FIG. 22, a side surface of the fourth magnet unit 532 that faces the third magnet unit 531 is a second slope 532a. On the basis of this, an edge of the second slope 532a that faces the second axis O2 is defined as a third edge k3, and an edge of the second slope 532a that faces away from the second axis O2 is defined as a fourth edge k4. From the third edge k3 to the fourth edge k4, the second slope 532a is inclined in a direction away from the third magnet unit 531.

Similarly, still referring to FIG. 22, a side surface of the fifth magnet unit 541 that faces the sixth magnet unit 542 is a third slope 541a. On the basis of this, an edge of the third slope 541a that faces the second axis O2 is defined as a fifth edge k5, and an edge of the third slope 541a that faces away from the second axis O2 is defined as a sixth edge k6. From the fifth edge k5 to the sixth edge k6, the third slope 541a is inclined in a direction away from the sixth magnet unit 542.

still referring to FIG. 22, a side surface of the sixth magnet unit 542 that faces the fifth magnet unit 541 is a fourth slope 542a. On the basis of this, an edge of the fourth slope 542a that faces the second axis O2 is defined as a seventh edge k7, and an edge of the fourth slope 542a that faces away from the second axis O2 is defined as an eighth edge k8. From the seventh edge k7 to the eighth edge k8, the fourth slope 542a is inclined in a direction away from the fifth magnet unit 541.

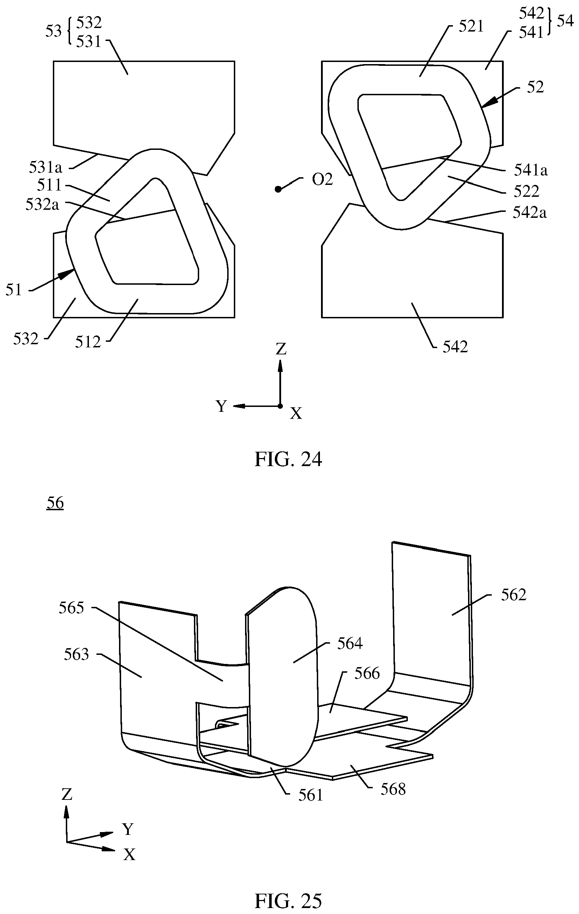

In this way, referring to FIG. 23 and FIG. 24, FIG. 23 is a schematic diagram of relative positions of the assembly shown in FIG. 21 when the second coil 51 and the third coil 52 rotate clockwise to a maximum angle, and FIG. 24 is a schematic diagram of relative positions of the assembly shown in FIG. 21 when the second coil 51 and the third coil 52 rotate anticlockwise to a maximum angle. It can be learned from FIG. 23 and FIG. 24 that a triangular gap is formed between the first slope 531a and the second slope 532a, and the triangular gap can avoid a case that the first oblique side 511 and the second oblique side 512 are both opposite to the third magnet unit 531, and a case that the first oblique side 511 and the second oblique side 512 are both opposite to the fourth magnet unit 532. Moreover, a triangular gap is also formed between the third slope 541a and the fourth slope 542a, and the triangular gap can avoid a case that the third oblique side 521 and the fourth oblique side 522 are both opposite to the fifth magnet unit 541, and a case that the third oblique side 521 and the fourth oblique side 522 are both opposite to the sixth magnet unit 542. Therefore, a driving force of the first carrier 3 can be ensured, to avoid a driving failure.

Based on the foregoing embodiment, referring back to FIG. 22, a direction in which the third magnet unit 531 points to the fourth magnet unit 532 is the same as a direction in which the fifth magnet unit 541 points to the sixth magnet unit 542.

Based on the foregoing description, still referring to FIG. 22, a side surface of the third magnet unit 531 that faces the fifth magnet unit 541 is a first side surface 531b. The third magnet unit 531 further includes a second side surface 531c. The second side surface 531c is connected between the first side surface 531b and the first slope 531a, and is from the first side surface 531b to the first slope 531a. The second side surface 531c is inclined in a direction close to the fourth magnet unit 532 and away from the fifth magnet unit 541. In this way, a transition is made between the first side surface 531b and the first slope 531a by using the second side surface 531c, so that generation of a sharp corner at an edge of the third magnet unit 531 can be avoided, and another component can be prevented from being scratched.

Similarly, still referring to FIG. 22, a side surface of the fourth magnet unit 532 that faces the sixth magnet unit 542 is a third side surface 532b. The fourth magnet unit 532 further includes a fourth side surface 532c. The fourth side surface 532c is connected between the third side surface 532b and the second slope 532a, and is from the third side surface 532b to the second slope 532a. The fourth side surface 532c is inclined in a direction close to the third magnet unit 531 and away from the sixth magnet unit 542. In this way, a transition is made between the third side surface 532b and the second slope 532a by using the second side surface 531c, so that generation of a sharp corner at an edge of the fourth magnet unit 532 can be avoided, and another component can be prevented from being scratched.

Similarly, still referring to FIG. 22, a side surface of the fifth magnet unit 541 that faces the third magnet unit 531 is a fifth side surface 541b. The fifth magnet unit 541 further includes a sixth side surface 541c. The sixth side surface 541c is connected between the fifth side surface 541b and the third slope 541a, and is from the fifth side surface 541b to the third slope 541a. The sixth side surface 541c is inclined in a direction close to the sixth magnet unit 542 and away from the third magnet unit 531. In this way, a transition is made between the fifth side surface 541b and the third slope 541a by using the sixth side surface 541c, so that generation of a sharp corner at an edge of the fifth magnet unit 541 can be avoided, and another component can be prevented from being scratched.

Similarly, still referring to FIG. 22, a side surface of the sixth magnet unit 542 that faces the fourth magnet unit 532 is a seventh side surface 542b. The sixth magnet unit 542 further includes an eighth side surface 542c. The eighth side surface 542c is connected between the seventh side surface 542b and the fourth slope 542a, and is from the seventh side surface 542b to the fourth slope 542a. The eighth side surface 542c is inclined in a direction close to the fifth magnet unit 541 and away from the fourth magnet unit 532. In this way, a transition is made between the seventh side surface 542b and the fourth slope 542a by using the eighth side surface 542c, so that generation of a sharp corner at an edge of the sixth magnet unit 542 can be avoided, and another component can be prevented from being scratched.

According to the description of the foregoing embodiment, referring back to FIG. 19 and FIG. 20, the second magnet 53 and the third magnet 54 are disposed on a surface of the sixth side wall 73 that faces the first carrier 3, and two first magnets 42 are also disposed on the sixth side wall 73. Specifically, the two first magnets 42 are disposed on a surface of the sixth side wall 73 that faces away from the first carrier 3. Disposition positions of the two first magnets 42, the second magnet 53, and the third magnet 54 are close to each other, and cross-talk is easily generated among magnet fields.

To resolve the foregoing problem, in some embodiments, still referring to FIG. 19 and FIG. 20, a magnetic isolation sheet (not shown) is further embedded inside the sixth side wall 73, the two first magnets 42 are located on one side of the magnetic isolation sheet, and the second magnet 53 and the third magnet 54 are located on the other side of the magnetic isolation sheet. In this way, magnet fields may be isolated by using the magnetic isolation sheet, thereby avoiding generating cross-talk among magnet fields of the two first magnets 42, the second magnet 53, and the third magnet 54.

Referring back to FIG. 19 and FIG. 20, the third circuit board 56 includes, but is not limited to, a PCB, an FPC, or a board-shaped structure formed by braiding a flexible material and a wire. The third circuit board 56 is fixed on the first carrier 3.

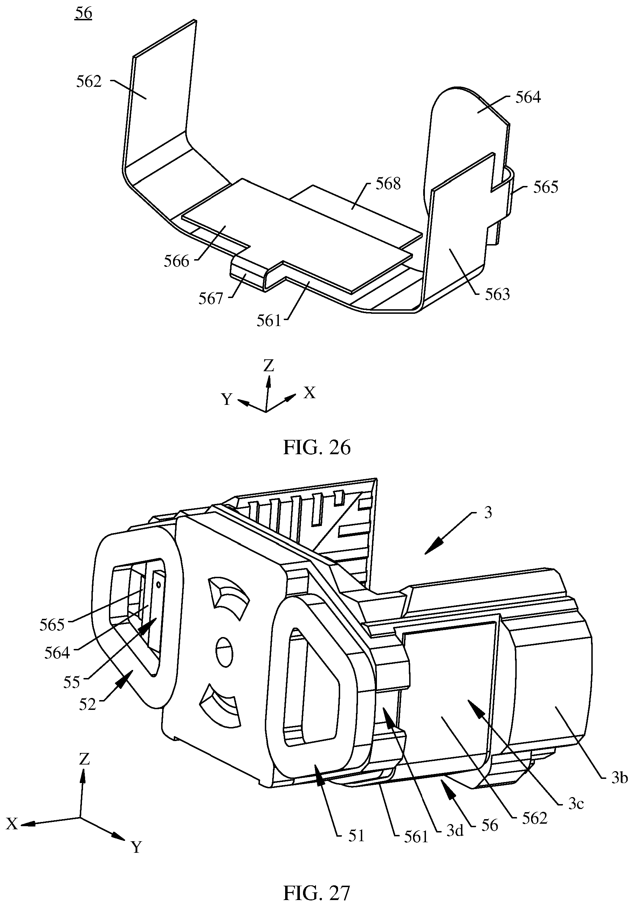

Referring to FIG. 25 and FIG. 26, FIG. 25 is a three-dimensional diagram of a third circuit board 56 in the head swinging activation apparatus shown in FIG. 19 and FIG. 20 from a viewing angle, and FIG. 26 is a three-dimensional diagram of the third circuit board 56 shown in FIG. 25 from another viewing angle.

The third circuit board 56 includes a first circuit board part 561, a second circuit board part 562, a third circuit board part 563, a fourth circuit board part 564, a fifth circuit board part 568, and a first connection part 565.

The second circuit board part 562, the first circuit board part 561, and the third circuit board part 563 are successively connected. The first connection part 565 is connected between the second circuit board part 562 and the fourth circuit board part 564, and is connected to the second circuit board part 562 and the fourth circuit board part 564. The fifth circuit board part 568 is connected to the first circuit board part 561.

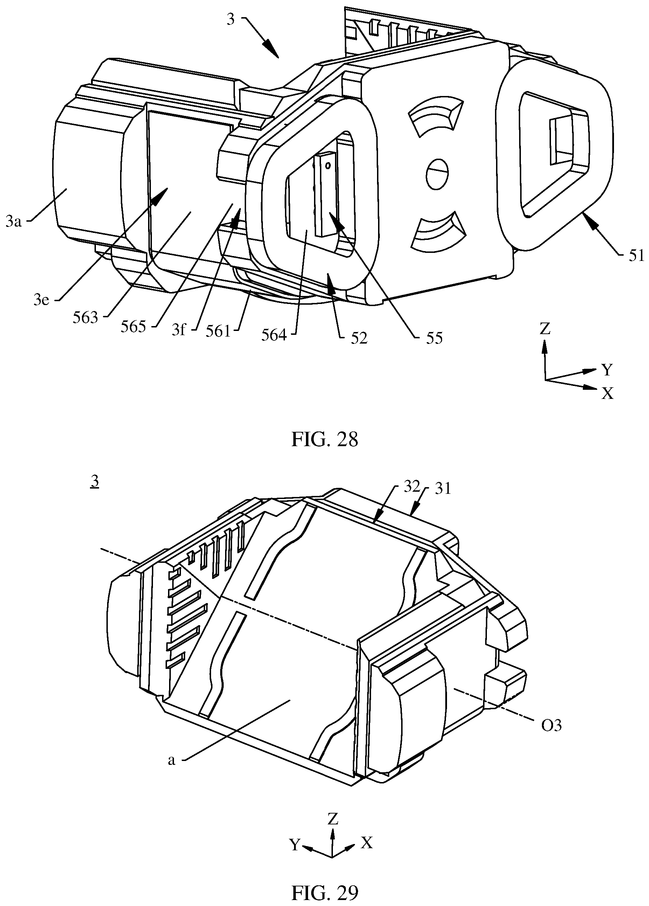

Referring to FIG. 27 and FIG. 28, FIG. 27 is an assembly diagram of a third circuit board 56, a first carrier 3, a second coil 51, a third coil 52, and a second driving chip 55 in the head swinging activation apparatus shown in FIG. 19 and FIG. 20, and FIG. 28 is a three-dimensional diagram of the assembly structure shown in FIG. 27 from another viewing angle.

The first circuit board part 561 is disposed on a surface of the first carrier 3 that faces the support board 0.

Referring to FIG. 27 mainly, the second circuit board portion 562 is disposed on a surface of the first carrier 3 that faces the fifth side wall 72. The second coil 51 is electrically connected to the second circuit board part 562.

In some embodiments, still referring to FIG. 27, the surface of the first carrier 3 that faces the fifth side wall 72 is provided with a first groove 3c and a second groove 3d. The second circuit board part 562 is accommodated in the first groove 3c, and an electrical connection line (not shown) between the second circuit board part 562 and the second coil 51 is accommodated in the second groove 3d. In this way, surface flatness of the first carrier 3 can be ensured, to avoid a case that when rotating relative to the second carrier 7, the first carrier 3 interferes with the second carrier 7.

Referring to FIG. 28 mainly, the third circuit board portion 563 is disposed on a surface of the first carrier 3 that faces the fourth side wall 71. The fourth circuit board portion 564 is disposed on a surface of the first carrier 3 that faces the sixth side wall 73. The third coil 52 and the second driving chip 55 are fixed to and electrically connected to the fourth circuit board part 564.

In some embodiments, still referring to FIG. 28, a surface of the first carrier 3 that faces the fourth side wall 71 is provided with a third groove 3e and a fourth groove 3f. The third circuit board part 563 is accommodated in the third groove 3e, and the first connection part 565 is accommodated in the fourth groove 3f. In this way, surface flatness of the first carrier 3 can be ensured, to avoid a case that when rotating relative to the second carrier 7, the first carrier 3 interferes with the second carrier 7.

The second driving chip 55 is electrically connected to the second coil 51 and the third coil 52 by using the third circuit board 56. The second driving chip 55 is configured to output a driving current to the second coil 51 and the third coil 52. Moreover, the second driving chip 55 is further configured to detect a rotation angle of the first carrier 3 relative to the second carrier 7, to generate a second rotation angle signal. The second rotation angle signal is used for implementing closed-loop control on the second driving assembly 5.

A structural form of the second driving chip 55 may be the same as that of the first driving chip 55. Details are not described herein again.

Based on the foregoing description, referring to FIG. 25 and FIG. 26, the third circuit board 56 includes a fourth port (not shown). The fourth port is disposed on the fifth circuit board part 568, and the fourth port is electrically connected to the second driving chip 55 by using the third circuit board 56, to input a second power signal and a second control signal to the second driving chip 55, and output the second rotation angle signal.

Based on this, referring to FIG. 10 and FIG. 11 together, the second circuit board 46 further includes a fifth port 46c. The fourth port on the fifth circuit board part 568 is fixed to and electrically connected to the fifth port 46c of the second circuit board 46. The fifth port 46c is electrically connected to the third port 46b by using the second circuit board 46. The third port 46b is electrically connected to the foregoing controller.

Therefore, the is further electrically connected to the controller by using the second circuit board 46, to receive the second power signal and the second control signal from the controller, and output the second rotation angle signal to the controller, so that the controller generates the foregoing second control signal.

The foregoing describes specific structures of the nodding activation apparatus and the head swinging activation apparatus. The nodding activation apparatus is configured to drive the first carrier 3 to rotate about the first axis O1 relative to the base body 1, and the head swinging activation apparatus is configured to drive the first carrier 3 to rotate about the second axis O2 relative to the base body 1.

Based on the foregoing description, the first carrier 3 may be an integral structural member, or may include an assembly integrated with an OIS function, which is not specifically limited herein.

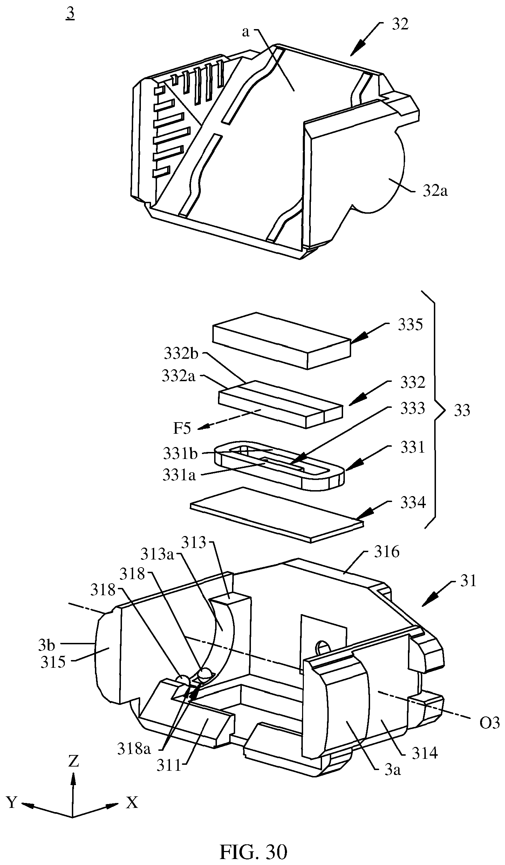

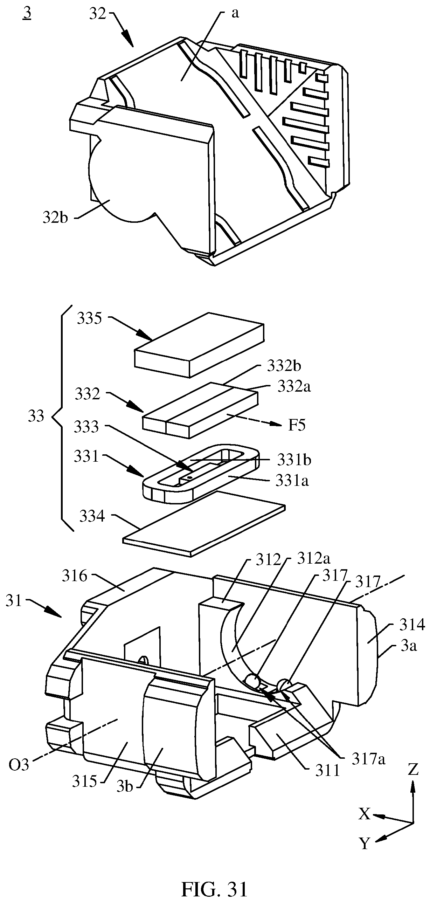

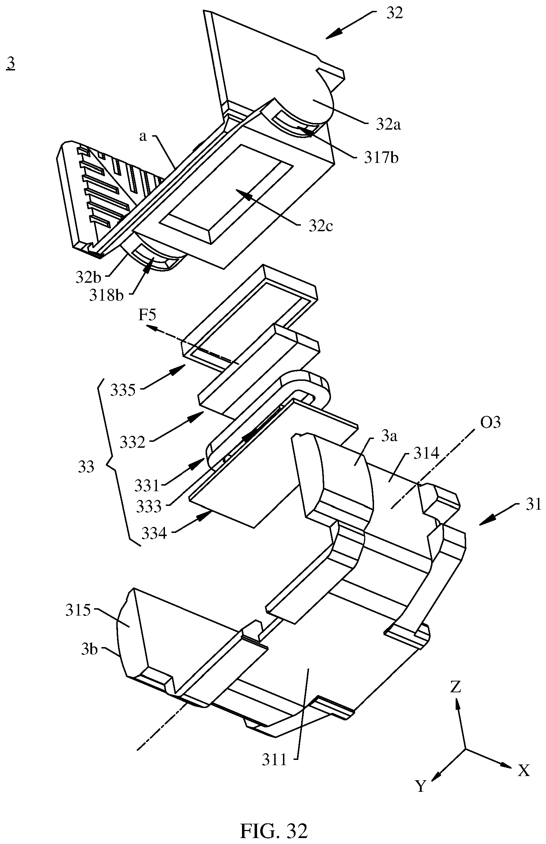

In some embodiments, referring to FIG. 29 to FIG. 32, FIG. 29 is a three-dimensional diagram of a first carrier 3 in the driving motor 304 shown in FIG. 8, FIG. 30 is a schematic diagram of an exploded structure of the first carrier 3 shown in FIG. 29, FIG. 31 is a schematic diagram of an exploded structure of the first carrier 3 shown in FIG. 30 from another viewing angle, and FIG. 32 is a schematic diagram of an exploded structure of the first carrier 3 shown in FIG. 30 from another viewing angle.

The first carrier 3 includes a first carrier unit 31, a second carrier unit 32, and a third driving assembly 33.

The second coil 51, the third coil 52, and the third circuit board 56 in FIG. 19 and FIG. 20 are all fixed on the first carrier unit 31, and the first carrier unit 31 may be rotatably connected to the rotating shaft 8 in FIG. 19 and FIG. 20.

Based on the foregoing description, the support surface a is disposed on the second carrier unit 32. The second carrier unit 32 is connected to the first carrier unit 31 rotatably about a third axis 03.

The third axis O3 may be parallel to or collinear with the first axis O1, may be parallel to or collinear with the second axis O2, or may be inclined relative to the first axis O1 or the second axis O2, which is not specifically limited herein. This embodiment provides descriptions by using an example in which the third axis O3 is collinear with the first axis O1. This cannot be considered to constitute a special limitation on this application.

Specifically, referring to FIG. 30 and FIG. 31 mainly, the first carrier unit 31 may include a base portion 311, a first support portion 312, and a second support portion 313.

The first support portion 312 and the second support portion are disposed on the base portion 311, and the first support portion 312 and the second support portion 313 are arranged at an interval along a length direction of the third axis O3. The first support portion 312 is provided with a first semi-circular arc concave surface 312a, and the second support portion 313 is provided with a second semi-circular arc concave surface 313a. A central angle corresponding to the first semi-circular arc concave surface 312a and the second semi-circular arc concave surface 313a may be 180°, may be greater than 180°, or may be less than 180°, which is not specifically limited herein. A circular centerline corresponding to the first semi-circular arc concave surface 312a and a circular centerline corresponding to the second semi-circular arc concave surface 313a are both collinear with the third axis O3.

Based on the foregoing description, still referring to FIG. 30 and FIG. 31, the second carrier unit 32 is provided with a first semi-circular convex portion 32a and a second semi-circular convex portion 32b. A circular centerline corresponding to the first semi-circular convex portion 32a and a circular centerline corresponding to the second semi-circular convex portion 32b are collinear. In addition, the first semi-circular convex portion 32a is supported on the first semi-circular arc concave surface 312a and can rotate along the first semi-circular arc concave surface 312a. The second semi-circular convex portion 32b is supported on the second semi-circular arc concave surface 313a and can rotate along the second semi-circular arc concave surface 313a.

In this way, the first semi-circular convex portion 32a and the second semi-circular convex portion 32b can be made in relatively large sizes, which can ensure the support stability.

In some embodiments, still referring to FIG. 30 and FIG. 31, at least one fourth ball 317 is disposed between the first semi-circular arc concave surface 312a and the first semi-circular convex portion 32a, and at least one fifth ball 318 is disposed between the second semi-circular arc concave surface 313a and the second semi-circular convex portion 32b. Optionally, there are both two fourth balls 317 and two fifth balls 318. The fourth ball 317 and the fifth ball 318 are used for reducing wear and prolonging the service life.

Based on the foregoing embodiment, still referring to FIG. 30 and FIG. 31, a position on the first semi-circular arc concave surface 312a corresponding to each fourth ball 317 is provided with a third circular-arc-shaped limiting groove 317a, and a position on the second semi-circular arc concave surface 313a corresponding to each fifth ball 318 is provided with a fourth circular-arc-shaped limiting groove 318a.

Based on this, referring to FIG. 32 mainly, a position on the first semi-circular convex portion 32a corresponding to the foregoing at least one fourth ball 317 is provided with a fifth circular-arc-shaped limiting groove 317b. The fourth ball 317 is disposed between the third circular-arc-shaped limiting groove 317a and the fifth circular-arc-shaped limiting groove 317b, to prevent the fourth ball 317 from falling off.
still referring to FIG. 32, a position on the second semi-circular convex portion 32b corresponding to the foregoing at least one fifth ball 318 is provided with a sixth circular-arc-shaped limiting groove 318b. The fifth ball 318 is disposed between the fourth circular-arc-shaped limiting groove 318a and the sixth circular-arc-shaped limiting groove 318b, to prevent the fifth ball 318 from falling off.

Based on the foregoing description, still referring to FIG. 29 to FIG. 31, the first carrier unit further 31 includes a first side portion 314 and a second side portion 315.

The first side portion 314 is disposed on a side of the first support portion 312 facing away from the second support portion 313, and the second side portion 315 is disposed on a side of the second support portion 313 facing away from the first support portion 312. The second convex arc surface 3a is located on a surface of the first side portion 314 facing away from the first support portion 312, and the third convex arc surface 3b is located on a surface of the second side portion 315 facing away from the second support portion 313.

In this way, the first semi-circular arc concave surface 312a and the second convex arc surface 3a may be dispersedly deployed on the first support portion 312 and the first side portion 314, and the second semi-circular arc concave surface 313a and the third convex arc surface 3b may be dispersedly deployed on the second support portion 313 and the second side portion 315. This deployment is proper and can ensure structural strength.

Based on the foregoing description, still referring to FIG. 29 to FIG. 31, the first carrier unit 31 further includes a third side portion 316. The third side portion 316 is connected between the first side portion 314 and the second side portion 315 and is disposed opposite to the sixth side wall 73. Based on this, the second carrier unit 32 is located between the first side portion 314 and the second side portion 315, and is located on a side of the third side portion 316 that faces away from the sixth side wall 73. The second coil 51 and the third coil 52 are disposed on a surface of the third side portion 316 that faces the sixth side wall 73. The second magnet 53 and the third magnet 54 are disposed on a surface of the sixth side wall 73 that faces the third side portion 316. The first carrier unit 31 is specifically connected to the foregoing rotating shaft 8 by using the third side portion 316.

In this way, the first support portion 312, the second support portion 313, and the second carrier unit 32 may be protected by using the first side portion 314, the second side portion 315, and the third side portion 316, to avoid a case that when rotating relative to the first carrier unit 31, the second carrier unit 32 interferes with the second carrier 7 and the base body 1.

Still referring to FIG. 30 to FIG. 32, the third driving assembly 33 is configured to drive the second carrier unit 32 to rotate about the third axis O3 relative to the first carrier unit 31, to implement OIS.

In some embodiments, referring to FIG. 30 to FIG. 32, the third driving assembly 33 includes a fourth coil 331, a fourth magnet 332, a third driving chip 333, a second reinforcing board 334, and a support member 335.

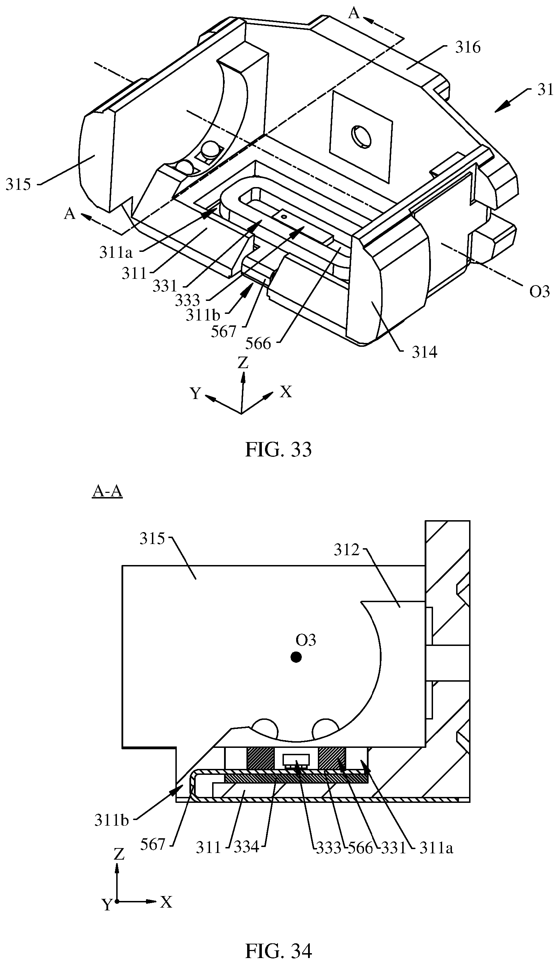

The fourth coil 331 is disposed on the base portion 311. In some embodiments, referring to FIG. 30 and FIG. 31 mainly, a surface of the base portion 311 facing the second carrier unit 32 is provided with a second sunken groove 311a. Referring back to FIG. 25 and FIG. 26, the third circuit board 56 further includes a sixth circuit board part 566 and a second connection part 567. The second connection part 567 is connected between the sixth circuit board part 566 and the first circuit board part 561. Referring to FIG. 33 and FIG. 34, FIG. 33 is an assembly diagram of the third circuit board 56 shown in FIG. 25 and FIG. 26, and a first carrier unit 31 and a third driving assembly 33 of the first carrier 3 shown in FIG. 29 to FIG. 32, and FIG. 34 is a schematic cross-sectional structural diagram of the assembly structure shown in FIG. 33 along a direction A-A.

The sixth circuit board part 566, the fourth coil 331, and the third driving chip 333 are accommodated in the second sunken groove 311a, and the fourth coil 331 and the third driving chip 333 are both disposed on the sixth circuit board part 566.

The second sunken groove 311a is configured to avoid a case that the fourth coil 331 projects out of a surface of the base portion 311, and avoid a case that when rotating relative to the first carrier unit 31, the second carrier unit 32 interferes with the second carrier unit 32.

The third driving chip 333 is electrically connected to the fourth coil 331 by using the sixth circuit board part 566. The third driving chip 333 is configured to output a driving current to the fourth coil 331. Moreover, the third driving chip 333 is further configured to detect a rotation angle of the second carrier unit 32 relative to the first carrier unit 31, to generate a third rotation angle signal. The third rotation angle signal is used for implementing closed-loop control on the third driving assembly 33.

A structural form of the third driving chip 333 may be the same as that of the first driving chip 55. Details are not described herein again.

Based on the foregoing description, referring to FIG. 25 and FIG. 26 together, the fourth port on the fifth circuit board part 568 is further electrically connected to the third driving chip 333 by using the third circuit board 56, to input a third power signal and a third control signal to the third driving chip 333, and output the third rotation angle signal.

Based on this, referring to FIG. 10 and FIG. 11 together, the fourth port on the fifth circuit board part 568 is fixed to and electrically connected to the fifth port 46c of the second circuit board 46. The fifth port 46c is electrically connected to the third port 46b by using the second circuit board 46. The third port 46b is electrically connected to the foregoing controller.

Therefore, the is further electrically connected to the controller by using the second circuit board 46, to receive the third power signal and the third control signal from the controller, and output the third rotation angle signal to the controller, so that the controller generates the foregoing third control signal.

Based on the foregoing description, referring to FIG. 34 mainly, the second reinforcing board 334 is disposed between the sixth circuit board part 566 and a bottom surface of the second sunken groove 311a. The second reinforcing board 334 is configured to reinforce the sixth circuit board part 566, to avoid a case that the sixth circuit board part 566 is uneven or scratched because the bottom surface of the second sunken groove 311a is uneven.

A material of the second reinforcing board 334 includes, but is not limited to, metal such as stainless steel, aluminum alloy, magnesium alloy, and magnesium-aluminum alloy, and plastic such as polycarbonate (polycarbonate, PC), PC+ glass fiber, and ABS plastic (acrylonitrile-butadiene-styrene plastic).

In some embodiments, referring to FIG. 33 mainly, a position on the base portion 311 corresponding to the second connection portion 567 is provided with a third sunken groove 311b. The second connection portion 567 is accommodated in the third sunken groove 311b, to avoid a case that the second connection portion 567 interferes with rotation of the second carrier unit 32.

Referring back to FIG. 30 to FIG. 32, the fourth magnet 332 is disposed in the second carrier unit 32.

In some embodiments, referring to FIG. 32 mainly, a surface of the second carrier unit 32 that faces the first carrier unit 31 is provided with a fourth sunken groove 32c. The fourth magnet 332 is accommodated in the fourth sunken groove 32c, to avoid generating interference between the fourth magnet 332 and the first carrier unit 31 in a process in which the second carrier unit 32 rotates relative to the first carrier unit 31, thereby improving structural compactness.

In some embodiments, still referring to FIG. 32, the support member 335 is disposed between the fourth magnet 332 and the fourth sunken groove 32c, to avoid a case that an inner surface of the fourth sunken groove 32c is uneven, and consequently the fourth magnet 332 is skewed or misplaced.

The fourth coil 331 is opposite to the fourth magnet 332.

Specifically, referring to FIG. 30 to FIG. 32, the fourth coil 331 includes a third side portion 331a and a fourth side portion 331b that are opposite to each other. A length direction of the third side portion 331a and a length direction of the fourth side portion 331b are parallel to the Y-axis direction.

The fourth magnet 332 includes a seventh magnet unit 332a and an eighth magnet unit 332b. The seventh magnet unit 332a and the eighth magnet unit 332b are arranged along the X-axis direction.

A magnetizing direction of the seventh magnet unit 332a and a magnetizing direction of the eighth magnet unit 332b are both parallel to the Z-axis direction, and the magnetizing direction of the seventh magnet unit 332a is opposite to the magnetizing direction of the eighth magnet unit 332b.

The third side portion 331a is opposite to the seventh magnet unit 332a, and the fourth side portion 331b is opposite to the eighth magnet unit 332b.

When the fourth coil 331 is powered on, the seventh magnet unit 332a and the eighth magnet unit 332b are subject to ampere forces along the X-axis direction, and directions of the ampere forces to which the seventh magnet unit 332a and the eighth magnet unit 332b are subject are the same. For example, a resultant force of the ampere forces to which the seventh magnet unit 332a and the eighth magnet unit 332b are subject may be a resultant force F5, and a distance between a line of action of the resultant force F5 and the third axis O3 is greater than 0. In this way, the second carrier unit 32 can be driven to rotate about the third axis O3 relative to the first carrier unit 31.

It should be noted that disposition positions of the fourth coil 331 and the fourth magnet 332 may be interchanged. Specifically, the fourth coil 331 may be disposed in the second carrier unit 32, and the fourth magnet 332 is disposed in the first carrier unit 31, which is not specifically limited herein.

The driving assembly including the fourth coil 331 and the fourth magnet 332 is simple to control, and has a relatively large driving force. In another embodiment, the driving assembly including the fourth coil 331 and the fourth magnet 332 may alternatively be replaced with another driving assembly such as a shape memory alloy (shape memory alloy, SMA), which is not specifically limited herein.

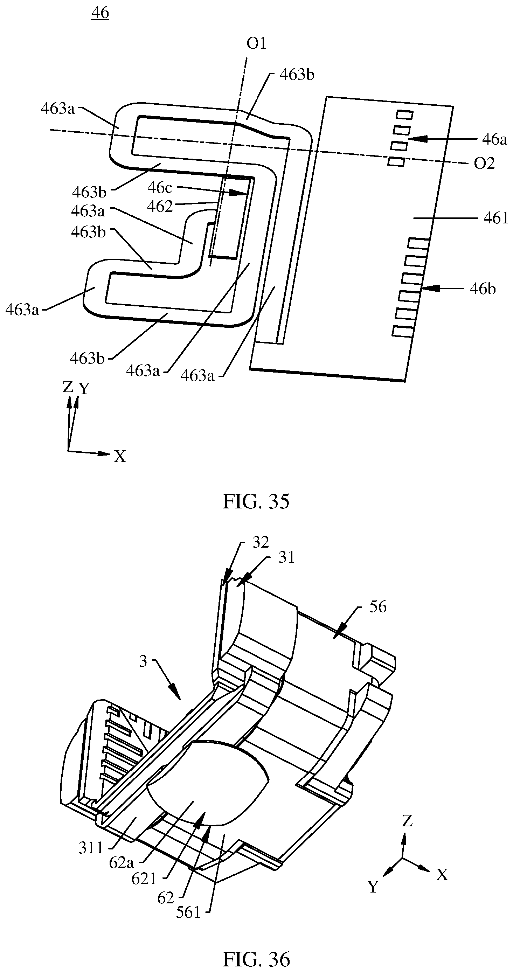

Based on any one of the foregoing embodiments, motion manners of the first carrier 3 relative to the base body 1 include rotation about the first axis O1 and rotation about the second axis O2. The second circuit board 46 is connected between the first carrier 3 and the base body 1. Based on this, a case that the second circuit board 46 interferes with rotation of the first carrier 3 is avoided. In some embodiments, referring to FIG. 35, FIG. 35 is a schematic structural diagram of a second circuit board 46 in the nodding activation apparatus shown in FIG. 10 and FIG. 11.

The second circuit board 46 includes a fixed segment 461, a connection segment 462, and a free segment 463.

The fixed segment 461 is fixed to the support board 0 in the nodding activation apparatus shown in FIG. 10 and FIG. 11, and the connection segment 462 is fixed to the third circuit board 56 in the head swinging activation apparatus shown in FIG. 19 and FIG. 20. Specifically, the connection segment 462 may be fixed to the fifth circuit board part 568 of the third circuit board 56.

The free segment 463 is connected between the fixed segment 461 and the connection segment 462. The free segment 463 is in a free state, that is, the free segment 463 is not fixed to any other structure. At least the free segment 463 of the second circuit board 46 is of a flexible structure.

Based on the foregoing description, the free segment 463 has a curved extension shape, so that the connection segment 462 has a degree of freedom of rotation about the first axis O1 and the second axis O2 relative to the fixed segment 461.

Specifically, still referring to FIG. 35, the free segment 463 includes a plurality of first extension segments 463a and a plurality of second extension segments 463b.

Extension directions of the first extension segments 463a are parallel to the first axis O1, and extension directions of the second extension segments 463b are parallel to the second axis O2.

From the fixed segment 461 to the connection segment 462, the plurality of first extension segments 463a and the plurality of second extension segments 463b are sequentially alternately disposed. In the embodiment shown in FIG. 35, there are five first extension segments 463a, and there are four second extension segments 463b. Certainly, in another embodiment, there may alternatively be another quantity of first extension segments 463a and another quantity of second extension segments 463b, which is not specifically limited herein.

Referring back to FIG. 8, the first braking assembly 6 includes a first braking member 61 and a second braking member 62.

The first braking member 61 is disposed on the base body 1. Specifically, the first braking member 61 may be directly disposed on the base body 1, or may be disposed on another structure connected to the base body 1. In some embodiments, referring to FIG. 9 to FIG. 11, the first braking member 61 is disposed on the support board 0 connected to the base body 1, which is not specifically limited herein.

Based on the foregoing description, still referring to FIG. 8, the second braking member 62 is disposed on the first carrier 3. Specifically, the second braking member 62 is disposed on a surface of the first carrier 3 that faces the support board 0. Referring to FIG. 36, FIG. 36 shows an assembly structure of a first carrier 3 and a second braking member 62 in the driving motor 304 shown in FIG. 8. The second braking member 62 is fixed on the base portion 311 of the first carrier unit 31 in the first carrier 3 and the first circuit board portion 561 of the third circuit board 56.

Referring to FIG. 8 and FIG. 36 together, the first braking member 61 includes a concave spherical surface 61a, and the second braking member 62 includes a convex spherical surface 62a.

In some embodiments, a spherical center of the convex spherical surface 61a and a spherical center of the concave spherical surface 62a approximately coincide with an intersection point of the first axis O1 and the second axis O2.

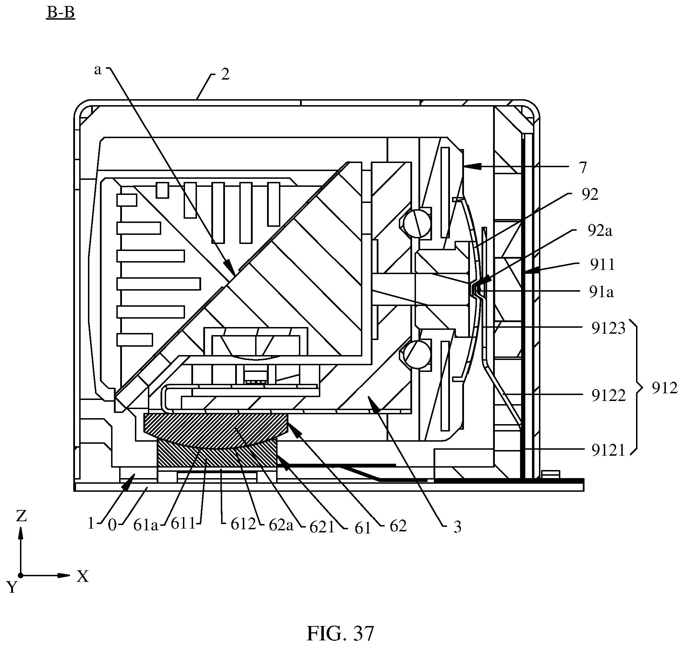

Referring to FIG. 37, FIG. 37 is a schematic cross-sectional structural diagram of a driving motor 304 in the assembly shown in FIG. 7 along a direction B-B. The convex spherical surface 61a fits with the concave spherical surface 62a.

In this way, when the first carrier 3 rotates about the first axis O1 and the second axis O2 relative to the base body 1, the convex spherical surface 61a and the concave spherical surface 62a generate a friction force due to relative motion. After the first carrier 3 and the optical path turning element 301 that is carried on the first carrier 3 rotate at a high speed and driving forces of the first driving assembly 4 and the second driving assembly 5 are canceled, the first carrier 3 and the optical path turning element 301 that is carried on the first carrier 3 may be quickly braked by using the friction force. The structure is simple and is convenient to operate.

In addition, the convex spherical surface 61a and the concave spherical surface 62a cooperate with each other and can have a certain limiting function for the first carrier 3 in the X-axis direction and the Y-axis direction, so that in the nodding activation apparatus shown in FIG. 10 and FIG. 11, a circular centerline corresponding to the third circular arc surface 741 can be maintained at a position collinear with a circular centerline corresponding to the first circular arc surface 141, and a circular centerline corresponding to the fourth circular arc surface can be maintained at a position collinear with a circular centerline corresponding to the second circular arc surface 151.

In some embodiments, referring to FIG. 8 and FIG. 37 together, the first braking member 611 includes a first braking member body 611. The concave spherical surface 61a is disposed on the first braking member body 611. The second braking member 62 includes a second braking member body 621. The convex spherical surface 62a is disposed on the second braking member body 621.

Based on the foregoing description, a material of the first braking member body 611 and the second braking member body 621 includes, but is not limited to, polyformaldehyde (polyformaldehyde, POM), an acrylonitrile-butadiene-styrene (acrylonitrile-butadiene-styrene, ABS) copolymer, stainless steel, rubber, or silica gel. The rubber may be specifically thermoplastic polyurethanes (thermoplastic polyurethanes, TUP). These materials have good wear resistance and a long life, and can improve structural stability of the driving motor 304 and prolong the service life.

Based on any one of the foregoing embodiments, in some embodiments, still referring to FIG. 8 and FIG. 37 together, the first braking member 61 further includes a first elastic member 612. The first elastic member 612 is disposed between the first braking member body 611 and the base body 1. In some embodiments, still referring to FIG. 8 and FIG. 37, the first elastic member 612 is disposed between the first braking member body 611 and the support board 0. The first elastic member 612 applies, to the first braking member body 611, an elastic force directed toward the second braking member body 621.

Alternatively, the second braking member 62 further includes a second elastic member (not shown), the second elastic member is disposed between the second braking member body 621 and the first carrier 3, and the second elastic member applies, to the second braking member body 621, an elastic force directed to the first braking member body 611.

Alternatively, the first elastic member 612 is disposed between the first braking member body 611 and the support board 0, and the second elastic member is disposed between the second braking member body 621 and the first carrier 3.

In this way, a pressing action force between the first braking member body 611 and the second braking member body 621 may be increased by using the first elastic member 612 and/or the second elastic member, thereby improve the friction force, to implement rapid braking.

In the foregoing embodiment, the first elastic member 611 and the second elastic member may be a spring, an elastic washer, a spring plate, or another elastic structure. In some embodiments, referring to FIG. 8 mainly, the first elastic member 611 is a spring plate.

Specifically, still referring to FIG. 8, the first elastic member 611 may include a first fixed part 611a, a second fixed part 611b, a bearing part 611c, a first elastic arm 611d, and a second elastic arm 611e.

The first fixed part 611a and the second fixed part 611b are fixed on the support board 0, and the first fixed part 611a and the second fixed part 611b are disposed at an interval. For ease of description below, an arrangement direction of the first fixed part 611a and the second fixed part 611b is defined as a second direction, and the second direction is parallel to the XY plane. Specifically, the second direction may be parallel to the X axis, or may be parallel to the Y axis. In the embodiment shown in FIG. 8, the second direction is parallel to the Y axis.

The bearing part 611c is located between the first fixed part 611a and the second fixed part 611b, and the first braking member body 611 is fixed on the bearing part 611c.

The bearing part 611c is located on a side, away from the support board 0, of a connection line between the first fixed part 611a and the second fixed part 611b, and is disposed at an interval from the support board 0.

The first elastic arm 611d is connected between one end of the bearing part 611c along the second direction and the first fixed part 611a, and the second elastic arm 611e is connected between the other end of the bearing part 611c along the second direction and the second fixed part 611b.

The first elastic arm 611d and the second elastic arm 611e may be bent and deformed, to apply, to the first braking member body 611, an elastic force directed toward the second braking member body 621.

This structure is simple, has good stability, and occupies a relatively small height, which helps to reduce the height of the driving motor 304.

Based on the foregoing embodiment, a structure of the second elastic member may be implemented with reference to the structure of the first elastic member 612. Details are not described herein again.

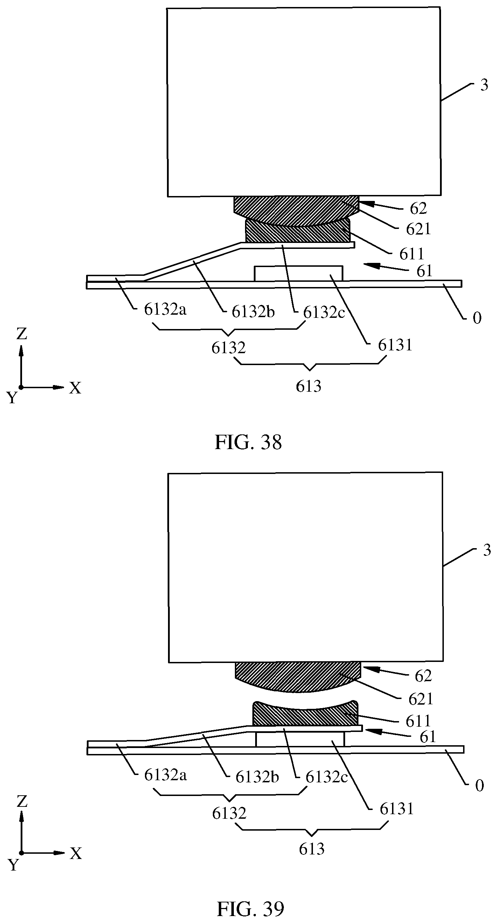

In some other embodiments, referring to FIG. 38, FIG. 38 is a schematic structural diagram of a first braking assembly 6 according to some other embodiments of this application. In this embodiment, in addition to the first braking member body 611, the first braking member 61 further includes a first driving structure 613. The first driving structure 613 is connected to the first braking member body 611, and the first driving structure 613 is configured to drive the first braking member body 611 to move in a direction away from the second braking member body 621, to separate the first braking member body 611 from the second braking member body 621. Referring to FIG. 39, FIG. 39 is a schematic diagram of relative positions of a first braking member body 611 and a second braking member body 621 that are separated in the first braking assembly 6 shown in FIG. 38.

Alternatively, in addition to the second braking member body 621, the second braking member 62 further includes a second driving structure. The second driving structure is connected to the second braking member body 621, and the second driving structure is configured to drive the second braking member body 621 to move in a direction away from the first braking member body 611, to separate the second braking member body 621 from the first braking member body 611.

Alternatively, the first braking member 61 includes a first braking member body 611 and a first driving structure 613, and the second braking member 62 includes a second braking member body 621 and the foregoing second driving structure.

In this way, when the driving motor 304 is running, the first braking member body 611 may be separated from the second braking member body 621 by using the first driving structure 613 and/or the second driving structure, to reduce rotation resistance of the first carrier 3, reduce wear, and prolong the service life.

In the foregoing embodiment, the first driving structure 613 and the second driving structure are in a plurality of structural forms.

In some embodiments, still referring to FIG. 38 and FIG. 39, the first driving structure 613 includes a first electromagnet 6131 and a first elastic member 6132. The first electromagnet 6131 is located on a side of the first braking member body 611 facing away from the second braking member body 621, and the first electromagnet 6131 is fixed relative to the base body 1. Optionally, referring to FIG. 38 and FIG. 39, the first electromagnet 6131 may be fixed on a support board 0.

The first elastic member 6132 includes a first fixed portion 6132a, a first elastic arm portion 6132b, and a first support portion 6132c.

The first fixed portion 6132a is fixed relative to the base body 1. Optionally, referring to FIG. 38 and FIG. 39, the first fixed portion 6132a is fixed on the support board 0.

The first support portion 6132c is located between the first electromagnet 6131 and the first braking member body 611. The first braking member body 611 is fixed on the first support portion 6132c. The first elastic arm portion 6132b is connected between the first fixed portion 6132a and the first support portion 6132c.

In the state shown in FIG. 38, when the first electromagnet 6131 is in a power-off state, a gap is provided between the first support portion 6132c and the first electromagnet 6131. When the first electromagnet 6131 is powered on, referring to FIG. 39, the first support portion 6132c is attracted to the first electromagnet 6131, and the first braking member body 611 is separated from the second braking member body 621.

The first driving structure 613 has a simple structure, is controlled conveniently, and has a relatively small volume, which can improve structural compactness of the driving motor 304.

Based on the foregoing description, a structure of the second driving structure may also be implemented with reference to the structure of the first driving structure 613. Details are not described herein again.

Referring back to FIG. 8, the second braking assembly 9 is disposed between the base body 1 and the second carrier 7, and is configured to prevent the second carrier 7 from rotating relative to the base body 1.

Specifically, referring to FIG. 11, the second braking assembly 9 includes a third braking member 91 and a fourth braking member 92. The third braking member 91 is disposed on the base body 1. Specifically, the third braking member 91 may be directly disposed on the base body 1, or may be disposed on another structure that is fixed on the base body 1. In some embodiments, the third braking member 91 is disposed on the first circuit board 44 fixed on the base body 1.

still referring to FIG. 11, the fourth braking member 92 is disposed on the second carrier 7. In some embodiments, referring to FIG. 37 together, the fourth braking member 92 may be in the shape of an arc plate, and is embedded in the second carrier 7. A material of the fourth braking member 92 includes, but is not limited to, metal such as stainless steel, an aluminum alloy, or a magnesium-aluminum alloy. The metal has relatively good hardness and wear resistance and can prolong the service life.

Based on the foregoing description, referring to FIG. 10, the third braking member 91 includes a first limiting portion 91a. Referring to FIG. 11, the fourth braking member 92 includes a second limiting portion 92a. One of the first limiting portion 91a and the second limiting portion 92a is a concave portion such as a limiting groove or a limiting hole, and the other is a convex portion such as a limiting protrusion or a limiting post. The limiting groove may be a toothed groove, and the limiting hole may be a tapered hole. The first limiting portion 91a cooperates with the second limiting portion 92a to prevent the second carrier 9 from rotating about the first axis O1 relative to the base body 1.

In this way, when the driving motor 304 is stopped and reset, the second carrier 7 may be prevented from rotating relative to the base body 1 by using the third braking member 91 and the fourth braking member 92, so that noise can be reduced and stopping stability and reliability can be ensured.

The driving motor 304 may be driven by using the first driving assembly 4 and the second driving assembly 5, to implement resetting.

In the foregoing embodiment, the third braking member 91 further includes a third driving structure, the third driving structure is connected to the first limiting portion 91a, and the third driving structure is configured to drive the first limiting portion 91a to move in a direction away from the second limiting portion 92a, to separate the first limiting portion 91a from the second limiting portion 92a.

Alternatively, the fourth braking member 92 further includes a fourth driving structure, the fourth driving structure is connected to the second limiting portion 92a, and the fourth driving structure is configured to drive the second limiting portion 92a to move in a direction away from the first limiting portion 91a, to separate the second limiting portion 92a from the first limiting portion 91a.

Alternatively, the second braking assembly 9 includes both the third driving structure and the fourth driving structure.

In this way, when the driving motor 304 is started, the first limiting portion 91a may be separated from the second limiting portion 92a by using the third driving structure and/or the fourth driving structure, to reduce rotation resistance of the second carrier 7, reduce wear, and prolong the service life.

In the foregoing embodiment, the third driving structure and the fourth driving structure are in a plurality of structural forms.

In some embodiments, referring to FIG. 10, the third driving structure includes a second electromagnet 911 and a second elastic member 912.

Referring to FIG. 11 together, the second electromagnet 911 is located on a side of the first limiting portion 91a facing away from the second limiting portion 92a, and the second electromagnet 911 is fixed relative to the base body 1. In some embodiments, the second electromagnet 911 is fixed on the first circuit board 44.

The second elastic member 912 includes a second fixed portion 9121, a second elastic arm portion 9122, and a second support portion 9123.

The second fixed portion 9121 is fixed relative to the base body 1. In some embodiments, the second fixed portion 9121 is fixed on the first circuit board 44.

The second support portion 9123 is located between the second electromagnet 911 and the first limiting portion 91a, the first limiting portion 91a is disposed on the second support portion 9123, and the second elastic arm portion 9122 is connected between the second fixed portion 9121 and the second support portion 9123.

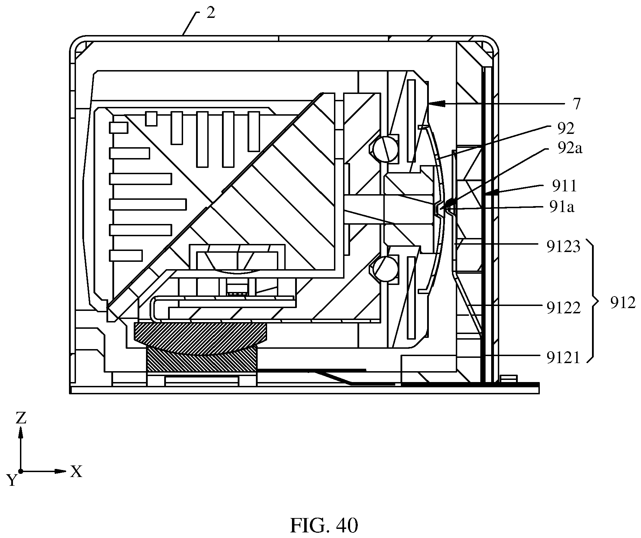

In the state shown in FIG. 37, when the second electromagnet 911 is in a power-off state, a gap is provided between the second support portion 9123 and the second electromagnet 911. When the second electromagnet 911 is powered on, the second support portion 9123 is attracted to the second electromagnet 911, and the first limiting portion 91a is separated from the second limiting portion 92a. Referring to FIG. 40, FIG. 40 is a schematic diagram of relative positions of a first limiting portion 91a and a second limiting portion 92a that are separated in the driving motor shown in FIG. 37.

The third driving structure has a simple structure, is controlled conveniently, and has a relatively small volume, which can improve structural compactness of the driving motor 304.

Based on the foregoing description, a structure of the fourth driving structure may also be implemented with reference to the structure of the third driving structure. Details are not described herein again.

The foregoing embodiments describe an application scenario in which the driving motor 304 is applied to a periscope camera module. In other embodiments, the driving motor 304 may also be applied to an upright camera module, to drive an upright lens to rotate about the X axis or the Y axis, to achieve a tracking objective. In addition, the first braking assembly and the second braking assembly may also be disposed between the upright lens and the base body. Details are not described in this application.

In the descriptions of this specification, the specific features, structures, materials, or characteristics may be combined in a proper manner in any one or more of the embodiments or examples.

Finally, it should be noted that the above embodiments are only used to describe the technical solutions of this application, but not intended to limit this application. Although this application has been described in detail with reference to the foregoing embodiments, it should be understood by a person skilled in the art that the technical solutions described in the foregoing embodiments can still be modified, or some or all of technical features can be replaced by equivalents. However, these modifications or substitutions do not cause the essence of corresponding technical solutions to depart from the spirit and scope of the technical solutions in embodiments of this application.

## Claims

1. A driving motor, comprising:
a base body;
a first carrier, wherein the first carrier is connected to the base body;
a first driving assembly, wherein the first driving assembly is configured to drive the first carrier to rotate about a first axis relative to the base body;
a second driving assembly, wherein the second driving assembly is configured to drive the first carrier to rotate about a second axis relative to the base body, and the second axis is perpendicular to the first axis; and
a first braking assembly, wherein the first braking assembly comprises a first braking member and a second braking member, the first braking member is disposed on the base body, the second braking member is disposed on the first carrier, the first braking member comprises a concave spherical surface, the second braking member comprises a convex spherical surface, and the convex spherical surface fits with the concave spherical surface.

2. The driving motor according to claim 1, wherein the first braking member comprises a first braking member body, and the concave spherical surface is disposed on the first braking member body;
the second braking member comprises a second braking member body, and the convex spherical surface is disposed on the second braking member body; and
a material of the first braking member body and the second braking member body is polyformaldehyde, an acrylonitrile-butadiene-styrene copolymer, stainless steel, rubber, or silica gel.

3. The driving motor according to claim 2, wherein the first braking member further comprises a first elastic member; the first elastic member is disposed between the first braking member body and the base body, and the first elastic member applies, to the first braking member body, an elastic force directed toward the second braking member body; and/or
the second braking member further comprises a second elastic member, the second elastic member is disposed between the second braking member body and the first carrier, and the second elastic member applies, to the second braking member body, an elastic force directed to the first braking member body.

4. The driving motor according to claim 2 or 3, wherein the first braking member further comprises a first driving structure, the first driving structure is connected to the first braking member body, and the first driving structure is configured to drive the first braking member body to move in a direction away from the second braking member body, to separate the first braking member body from the second braking member body; and/or
the second braking member further comprises a second driving structure, the second driving structure is connected to the second braking member body, and the second driving structure is configured to drive the second braking member body to move in a direction away from the first braking member body, to separate the second braking member body from the first braking member body.

5. The driving motor according to claim 4, wherein the first driving structure comprises a first electromagnet and a first elastic member;
the first electromagnet is located on a side of the first braking member body facing away from the second braking member body, and the first electromagnet is fixed relative to the base body;
the first elastic member comprises a first fixed portion, a first elastic arm portion, and a first support portion, and the first fixed portion is fixed relative to the base body; the first support portion is located between the first electromagnet and the first braking member body, the first braking member body is fixed on the first support portion, and the first elastic arm portion is connected between the first fixed portion and the first support portion;
when the first electromagnet is in a power-off state, a gap is provided between the first support portion and the first electromagnet; and when the first electromagnet is powered on, the first support portion is attracted to the first electromagnet, and the first braking member body is separated from the second braking member body.

6. The driving motor according to any one of claims 1 to 5, further comprising:
a second carrier, wherein the second carrier is connected to the base body rotatably about the first axis, and the first carrier is connected to the second carrier rotatably about the second axis;
the first driving assembly is disposed between the base body and the second carrier, and is configured to drive the second carrier to rotate about the first axis relative to the base body; and
the second driving assembly is disposed between the second carrier and the first carrier, and is configured to drive the first carrier to rotate about the second axis relative to the second carrier.

7. The driving motor according to claim 6, wherein the base body comprises a first side wall and a second side wall that are disposed opposite to each other and arranged at an interval along the first axis;
the first side wall is provided with a first semi-circular hole, and the second side wall is provided with a second semi-circular hole; a circular centerline corresponding to the first semi-circular hole and a circular centerline corresponding to the second semi-circular hole are both collinear with the first axis;
an inner wall surface of the first semi-circular hole comprises a first circular arc surface and a first plane along a circumferential direction of the first semi-circular hole, and the first circular arc surface and the first plane are arranged along a length direction of the second axis;
an inner wall surface of the second semi-circular hole comprises a second circular arc surface and a second plane along a circumferential direction of the second semi-circular hole, and the second circular arc surface and the second plane are also arranged along the length direction of the second axis;
the second carrier is located between the first side wall and the second side wall, the second carrier is provided with a first semi-circular shaft and a second semi-circular shaft, and a circular centerline corresponding to the first semi-circular shaft is collinear with a circular centerline corresponding to the second semi-circular shaft; and
the first semi-circular shaft is accommodated in the first semi-circular hole and is rotatable in the first semi-circular hole, and the second semi-circular shaft is accommodated in the second semi-circular hole and is rotatable in the second semi-circular hole.

8. The driving motor according to claim 7, wherein along a circumferential direction of the first semi-circular shaft, a side surface of the first semi-circular shaft comprises a third circular arc surface and a third plane, the third circular arc surface is opposite to the first circular arc surface, a circular centerline corresponding to the third circular arc surface is collinear with a circular centerline corresponding to the first circular arc surface, and the third plane and the first plane are disposed opposite to each other at an interval; and
along a circumferential direction of the second semi-circular shaft, a side surface of the second semi-circular shaft comprises a fourth circular arc surface and a fourth plane, the fourth circular arc surface is opposite to the second circular arc surface, a circular centerline corresponding to the fourth circular arc surface is collinear with a circular centerline corresponding to the second circular arc surface, and the fourth plane and the second plane are disposed opposite to each other at an interval.

9. The driving motor according to claim 8, wherein the first circular arc surface is provided with a first limiting groove, and the first limiting groove extends along an arc-shaped contour line of the first circular arc surface; at least one first ball is disposed between the first limiting groove and the third circular arc surface; and
the second circular arc surface is provided with a second limiting groove, the second limiting groove extends along an arc-shaped contour line of the second circular arc surface, and at least one second ball is disposed between the second limiting groove and the fourth circular arc surface.

10. The driving motor according to claim 9, wherein the first limiting groove runs through a surface of the first side wall that faces the second side wall along a length direction of the first axis; or
the second limiting groove runs through a surface of the second side wall that faces the first side wall along a length direction of the first axis.

11. The driving motor according to any one of claims 7 to 10, wherein the first side wall comprises a first side wall body and a first limiting member;
two ends of the first side wall body along the length direction of the second axis are respectively a first end and a second end, and the first end is provided with a notch that is sunken toward the second end;
the notch comprises a first notch part and a second notch part, the second notch part is located on a side of the first notch part away from the first end, and an inner wall surface of the first side wall body defining the second notch part forms the first circular arc surface;
a minimum width of the first notch part in a first direction is greater than or equal to a maximum width of the second notch part in the first direction; and the first limiting member is fixed in the first notch part, and at least a partial region of an end face of an end of the first limiting member that faces the second notch part forms the first plane;
wherein the first direction is perpendicular to the length direction of the first axis, and the first direction is further perpendicular to the length direction of the second axis.

12. The driving motor according to any one of claims 7 to 11, wherein the base body further comprises a third side wall, and the third side wall is connected between the first side wall and the second side wall;
the first driving assembly comprises a first coil and a first magnet; and the first coil is disposed on the third side wall, the first magnet is disposed on the second carrier, and the first coil is opposite to the first magnet.

13. The driving motor according to claim 12, wherein a surface of the second carrier that faces the third side wall comprises a first convex arc surface, the first convex arc surface projects toward the third side wall, and a circular centerline corresponding to the first convex arc surface is parallel to or collinear with the first axis.

14. The driving motor according to claim 13, wherein the first convex arc surface is provided with a first sunken groove, the first magnet is disposed in the first sunken groove, and the first magnet comprises a first surface and a second surface;
the first surface faces the third side wall, the first surface is a circular arc surface projecting toward the third side wall, and a circular centerline corresponding to the circular arc surface is parallel to or collinear with the first axis; and
the second surface faces away from the first surface, and the second surface is a plane.

15. The driving motor according to claim 13 or 14, wherein the second carrier comprises a fourth side wall, a fifth side wall, and a sixth side wall;
the fourth side wall and the fifth side wall are disposed opposite to each other at an interval, the first semi-circular shaft is disposed on a surface of the fourth side wall facing away from the fifth side wall, and the second semi-circular shaft is disposed on a surface of the fifth side wall facing away from the fourth side wall; and
the sixth side wall is connected between the fourth side wall and the fifth side wall, the sixth side wall is opposite to the third side wall, and the first convex arc surface is located on a surface of the sixth side wall facing the third side wall.

16. The driving motor according to claim 15, wherein the first carrier is located between the fourth side wall and the fifth side wall, a rotating shaft is rotatably connected to the sixth side wall, an axis of the rotating shaft is collinear with the second axis, and the first carrier is connected to the rotating shaft.

17. The driving motor according to claim 16, wherein a surface of the first carrier that faces the fourth side wall is a second convex arc surface, the second convex arc surface projects toward the fourth side wall, and a circular centerline corresponding to the second convex arc surface is parallel to or collinear with the second axis; a surface of the fourth side wall that faces the first carrier is a first concave arc surface, the first concave arc surface is concave in a direction away from the first carrier, a circular centerline corresponding to the first concave arc surface is parallel to or collinear with the second axis, and the first concave arc surface faces the second convex arc surface;
a surface of the first carrier that faces the fifth side wall is a third convex arc surface, the third convex arc surface projects toward the fifth side wall, and a circular centerline corresponding to the third convex arc surface is parallel to or collinear with the second axis; and a surface of the fifth side wall that faces the first carrier is a second concave arc surface, the second concave arc surface is concave in the direction away from the first carrier, a circular centerline corresponding to the second concave arc surface is parallel to or collinear with the second axis, and the second concave arc surface faces the third convex arc surface.

18. The driving motor according to claim 17, wherein the second driving assembly comprises a second coil, a third coil, a second magnet, and a third magnet;
the second coil and the third coil are disposed on a surface of the first carrier that faces the sixth side wall, and the second coil and the third coil are located on two opposite sides of the rotating shaft and are symmetrically disposed about the rotating shaft; and
the second magnet and the third magnet are disposed on a surface of the sixth side wall that faces the first carrier, the second magnet is opposite to the second coil, and the third magnet is opposite to the third coil.

19. The driving motor according to claim 18, wherein winding paths of the second coil and the third coil are each in a shape of an isosceles trapezoid, and a top side of the isosceles trapezoid is located on a side, away from the rotating shaft, of a bottom side of the isosceles trapezoid.

20. The driving motor according to claim 19, wherein the second coil comprises a first oblique side and a second oblique side that are opposite, the first oblique side is connected between one end of the top side of the second coil and one end of the bottom side of the second coil, and the second oblique side is connected between the other end of the top side of the second coil and the other end of the bottom side of the second coil;
the second magnet comprises a third magnet unit and a fourth magnet unit, and the third magnet unit and the fourth magnet unit are arranged at an interval along the first direction; the first direction is perpendicular to the length direction of the first axis, and the first direction is further perpendicular to the length direction of the second axis;
a magnetizing direction of the third magnet unit and a magnetizing direction of the fourth magnet unit are both parallel to the length direction of the second axis, and the magnetizing direction of the third magnet unit is opposite to the magnetizing unit of the fourth magnet unit; and
the first oblique side is opposite to the third magnet unit, and the second oblique side is opposite to the fourth magnet unit.

21. The driving motor according to claim 20, wherein a side surface of the third magnet unit that faces the fourth magnet unit is a first slope, an edge of the first slope that faces the second axis is a first edge, an edge of the first slope that faces away from the second axis is a second edge, and the first slope is inclined, from the first edge to the second edge, in a direction away from the fourth magnet unit;
a side surface of the fourth magnet unit that faces the third magnet unit is a second slope, an edge of the second slope that faces the second axis is a third edge, and an edge of the second slope that faces away from the second axis is a fourth edge; and the second slope is inclined in a direction away from the third magnet unit from the third edge to the fourth edge.

22. The driving motor according to any one of claims 18 to 21, wherein the first carrier comprises a first carrier unit, a second carrier unit, and a third driving assembly;
the first carrier unit is rotatably connected to the rotating shaft;
the second carrier unit is connected to the first carrier unit rotatably about a third axis; and
the third driving assembly is configured to drive the second carrier unit to rotate about the third axis relative to the first carrier unit;
wherein the third axis is parallel to or collinear with the first axis.

23. The driving motor according to claim 22, wherein the first carrier unit comprises a base portion, a first support portion, and a second support portion;
the first support portion and the second support portion are disposed on the base portion, and the first support portion and the second support portion are arranged at an interval along a length direction of the third axis;
a first semi-circular arc concave surface is disposed on the first support portion, a second semi-circular arc concave surface is disposed on the second support portion, and a circular centerline corresponding to the first semi-circular arc concave surface and a circular centerline corresponding to the second semi-circular arc concave surface are both collinear with the third axis; and
the second carrier unit is provided with a first semi-circular convex portion and a second semi-circular convex portion, a circular centerline corresponding to the first semi-circular convex portion and a circular centerline corresponding to the second semi-circular convex portion are collinear, the first semi-circular convex portion is supported on the first semi-circular arc concave surface and is rotatable along the first semi-circular arc concave surface, and the second semi-circular convex portion is supported on the second semi-circular arc concave surface and is rotatable along the second semi-circular arc concave surface.

24. The driving motor according to claim 23, wherein the first carrier unit further comprises a first side portion and a second side portion;
the first side portion is disposed on a side of the first support portion facing away from the second support portion, and the second side portion is disposed on a side of the second support portion facing away from the first support portion; and
the second convex arc surface is located on a surface of the first side portion facing away from the first support portion, and the third convex arc surface is located on a surface of the second side portion facing away from the second support portion.

25. The driving motor according to claim 24, wherein the first carrier unit further comprises a third side portion; and
the third side portion is connected between the first side portion and the second side portion and is disposed opposite to the sixth side wall, the second carrier unit is located between the first side portion and the second side portion and is located on a side of the third side portion that faces away from the sixth side wall, the second coil and the third coil are disposed on a surface of the third side portion that faces the sixth side wall, and the second magnet and the third magnet are disposed on a surface of the sixth side wall that faces the third side portion.

26. The driving motor according to any one of claims 23 to 25, wherein the third driving assembly comprises a fourth coil and a fourth magnet; and
the fourth coil is disposed at the base portion, the fourth magnet is disposed on a surface of the second carrier unit that faces the base portion, and the fourth magnet is opposite to the fourth coil.

27. The driving motor according to any one of claims 6 to 26, further comprising:
a second braking assembly, wherein the second braking assembly comprises a third braking member and a fourth braking member, the third braking member is disposed on the base body, and the fourth braking member is disposed on the second carrier; and the third braking member comprises a first limiting portion, the fourth braking member comprises a second limiting portion, and the first limiting portion cooperates with the second limiting portion to prevent the second carrier from rotating about the first axis relative to the base body.

28. The driving motor according to claim 27, wherein the third braking member further comprises a third driving structure, the third driving structure is connected to the first limiting portion, and the third driving structure is configured to drive the first limiting portion to move in a direction away from the second limiting portion, to separate the first limiting portion from the second limiting portion; and/or
the fourth braking member further comprises a fourth driving structure, the fourth driving structure is connected to the second limiting portion, and the fourth driving structure is configured to drive the second limiting portion to move in a direction away from the first limiting portion, to separate the second limiting portion from the first limiting portion.

29. The driving motor according to claim 28, wherein the third driving structure comprises a second electromagnet and a second elastic member;
the second electromagnet is located on a side of the first limiting portion facing away from the second limiting portion, and the second electromagnet is fixed relative to the base body;
the second elastic member comprises a second fixed portion, a second elastic arm portion, and a second support portion, and the second fixed portion is fixed relative to the base body; the second support portion is located between the second electromagnet and the first limiting portion, the first limiting portion is disposed on the second support portion, and the second elastic arm portion is connected between the second fixed portion and the second support portion;
when the second electromagnet is in a power-off state, a gap is provided between the second support portion and the second electromagnet; and when the second electromagnet is powered on, the second support portion is attracted to the second electromagnet, and the first limiting portion is separated from the second limiting portion.

30. A camera module, comprising:
an optical path turning element;
an optical lens, wherein the optical lens is located on a light emergent side of the optical path turning element;
a photosensitive device, wherein the photosensitive device is located on a light emergent side of the optical lens; and
the driving motor according to any one of claims 1 to 29, wherein the optical path turning element is fixed on the first carrier of the driving motor.

31. An electronic device, comprising:
a display;
a back housing, wherein the back housing is fixed to the display;
the camera module according to claim 30, wherein the camera module is accommodated in the back housing; and
a circuit board assembly, wherein the circuit board assembly is accommodated in the back housing, and the circuit board assembly is electrically connected to the camera module.
